# EUROPEAN PATENT SPECIFICATION

(11) **EP 4 589 791 B1**
(45) Date of publication and mention of the grant of the patent: **02.12.2026**
(21) Application number: 24152701.9
(22) Date of filing: 18.01.2024
(51) Int. Cl.: H02G 1/14, H02G 1/10

(54) **AN APPARATUS FOR SUBMERGED CABLE INTERVENTIONS**
VORRICHTUNG FÜR UNTERGETAUCHTE KABELEINGRIFFE
APPAREIL POUR INTERVENTIONS DE CÂBLE IMMERGÉES

(43) Date of publication of application: 23.07.2025
(73) Proprietor: ESB INNOVATION ROI LIMITED, Dublin 2, D02 KT92 (IE)
(72) Inventor: O'ROURKE, Patrick, Carlow, R93C6Y4 (IE)
(74) Representative: MacLachlan IP Limited

(56) References cited:
- WO-A1-2017/036503
- CN-A- 116 598 945
- US-A1- 2014 056 648
- US-A1- 2020 377 184

## Description

### FIELD OF INVENTION

This invention relates to a subsea cable intervention habitat and method which allows a user to carry out in situ subsea cable intervention activity, such as cable jointing for cable repairs and subsea connection of dry mateable cable connectors, in both power and fibre optic applications.

### BACKGROUND OF INVENTION

The present invention relates to the subsea cable interventions. In particular, the invention relates to subsea cable jointing and cable connection of dry mateable connectors in the voltage range of 400V to 220kV subsea cables, and an apparatus enabling such activities. Subsea cables are commonly used to transfer power and / or data between remote locations. The cables are typically laid along the seabed to avoid the need for complex supports or cable routing. They may be buried in the seabed and / or covered. For example, they may be covered with rocks or with concrete plates. Over time, cables may fail or become damaged. As is known to those skilled in the art, damage to subsea cables will typically be in a specific location on the cable rather than throughout the full length of the cable.

The operation of repairing damaged or faulty cables or jointing cables in the water (subsea) is challenging. Constraints such as access to cable, visibility, wet environment, high pressure environment etc. add complexity to the process. As a result, the cable intervention or repair of a faulty underwater cable typically takes place on a specialist repair vessel, and broadly involves the following steps:
1. Pinpointing the fault location, preferably to an exact location;
2. Removal of any burial or protection items (e.g. concrete panels) placed over the cable for distances of sufficient length on either side of the fault to permit repair;
3. Removal of a section of cable by cutting either side of the fault location using a suitably equipped remotely operated vehicle (ROV);
4. Recovery to a vessel, of each end of the cable in turn;
5. Addition of a new section of cable between the cut ends; and
6. Return of the repaired section to the seabed.

As both the cable ends on either side of the fault are recovered onto the vessel, which is on the sea surface, whilst the rest of the cable length rests on the seabed, a large section of cable must be lifted from the seabed in order to carry out the repair. The length of section of cable which is lifted from the seabed is greater than the water column depth of the cable in that position. The length of the new section of cable which is added between the two cable ends as part of the repair is dictated by the water column depth at the location of the fault (which is the distance from the seabed to the sea surface). Typically, the length of the section of new cable required is approximately equal to three times the water depth at the repair location but can often be as much as 1000m, thus a large section of new cable is required in order to facilitate repositioning back onto the seabed once the repair has been completed.

To ensure that the faulty section of cable has been removed, the repair method can also include the step of inspecting and testing a first recovered cut end of the cable on board the vessel before returning it to the sea. The repaired first end can be marked with a buoy and returned to the sea, while the second cut end is recovered. This requires the additional steps of applying a temporary protective coating to the first cut end of the cable, in order to protect it once it is returned to the water, and subsequently removing this protective coating when completing the repair.

In addition, if the first end is returned to the seabed it will need to be recovered twice. Each recovery operation can take as long as twenty-four hours to complete, slowing the repair operation and increasing the overall cost. The recovery operation is typically performed using a grapnel and this can put strain on the cable or cause other types of damage to the cable. Furthermore, the recovery operation can also cause damage to the cable directly, so there is a risk that the cable end could acquire further damage on being recovered from the seabed.

It will be appreciated that repair of the cable will typically involve the insertion of a section of new cable. This can be problematic where the initial cuts are incorrectly located as it means that additional cable may need to be cut from the cable end to remove the fault following testing or inspection and thus relatively large additional lengths of spare cable must be accounted for in the spare's philosophy for the repair.

Improvements in the precision of fault location have reduced the amount of existing cable which typically must be cut and discarded when a fault has been determined. However, with the existing repair systems, particularly for cables located in deep waters, a significant amount of additional cable is still required to conduct the repair, particularly in deep water areas.

This additional cable must be stored and carried on the vessel to the location of the fault. Contingency lengths of cable are also typically carried in order to ensure that there is sufficient cable to make any type of repair, even if the fault has been incorrectly identified. The additional loops of surplus cable take up valuable space on the vessel and in most cases these additional loops are not used during the repair so the additional cable must be returned to shore again after the repair has been completed. This additional cable is typically shorter than a full reel of cable which may be required for a project so the potential for use in a different application or in projects thereafter is limited and the cable may often be scrapped. The need for long lengths of additional cable also increases repair costs, and problems with cable supply can lead to repairs being delayed. For cable which is used in the repair procedure, the additional lengths of installed cable are typically laid in repair loops on the seabed and as these loops are typically perpendicular to the line of the cable, they may also fall outside the consented corridor (or approved footprint) of the cable and even if they are approved, may bring complications and timing issues whilst requisite consent is achieved from the relevant parties.

WO 2017/036503 discloses a submersible habitat chamber for repairing subsea cable which is suitable for low voltage cables. The chamber comprises two half shells which assemble to form a single container environment. An access port through at least one of the half shells allows the user to access the contained environment from outside the chamber and a window in the sidewall of the chamber allows the user to see into the chamber. This submersible habitat chamber is however limited to low voltage applications and the chamber size cannot be extended, scaled up or modularised for longer or more complex repairs.

The prior art system is designed for low / medium voltage subsea cable repairs and is unsuitable for high voltage subsea cable repairs or jointing. Due to the geometry, size, weight and electrical stresses associated with high voltage cables, a single chamber design, such as that of the prior art, cannot provide sufficient space inside the chamber for repair or jointing of a high voltage cable to take place, nor is the single cable access in the sides of the single chamber suitable for high voltage cables as high voltage cables must be split into their constituent cores in order for a repair to take place. Furthermore, where some aspects of the cable repair preparation for low or medium voltage cables could be carried out in a wet environment prior to the jointing process, the entire process of jointing high voltage cables must be carried out in a dry environment, thus again requiring more space inside the chamber. The overall length of the cable section which would need to be prepared within the dry environment for a high voltage cable repair, coupled with the need to introduce new cable components and a new section of cable into the chamber while maintaining a dry environment, makes a single chamber option unfeasible and there is no teaching towards extending the useability window of the prior art single chamber. As such, it is necessary to invent a more versatile chamber system with functionality which will overcome the problems of the prior art and thus enable the repair of high voltage cables.

As used herein, it will be appreciated that the term 'sea' is understood to cover a wide range of wet environments. The term "sea" should not be construed as limiting in terms of geography or typical conditions. It will be appreciated that the inventive advances presented herein are principally applicable to subsea cable intervention such as jointing or connecting, however, they may equally be usefully employed in freshwater cable interventions such as jointing or connecting. Likewise, the term 'cable' should not be given a purely literal meaning but should be interpreted broadly to encompass conduits through which different resources may be carried, including electricity and data.

Similarly, the prior art is wholly unsuitable for use in performing dry-mateable cable connections due to the limit functionality of a single chamber of the prior art which cannot be connected to another chamber or opened subsea without a loss of integrity to the dry environment inside the chamber.

As described in the background section, traditionally, in order to repair a fault in a cable, the cable was retrieved from the seabed and brought above water level so that the cable repair can be performed in a dry environment. The invention of a subsea habitat for subsea cable repair represents a step change in the approach to subsea cable interventions, as it means that cable repair can take place underwater without needing to bring the cable to above the water level, however, limitations of the concept including its restricted suitability, which limits its use to low voltage applications, and a lack of flexible geometry means that more development is required in this field in order to provide an improved, more efficient apparatus with a broader range of capabilities and envelope of functionality.

The prior art was designed for low or medium voltage subsea cable repairs and does not provide the required functionality for high voltage subsea cable repairs / jointing. In the context of voltage throughout this document, the following terms Extra High Voltage, High Voltage, Medium Voltage and Low Voltage will be understood to comprise voltages in the ranges specified below.
- Extra High Voltage - Voltage range of ≥ 220 kV (Um = 245 kV).
- High Voltage - Voltage range of 30 kV (Um = 36 kV) < HV < 220 kV (Um = 245 kV)
- Medium Voltage - Voltage range of 6kV ≤ MV ≤ 30 kV (Um = 36 kV).
- Low Voltage - Voltage range of LV ≤ 6 kV.

Due to the geometry, size, weight and electrical stresses associated with high voltage cables, a single chamber design such as that of the prior art is not suitable for high voltage cable interventions such as jointing or dry mateable connections. Furthermore, although some aspects of the cable intervention preparation for low or medium voltage cables could be carried out in a wet environment prior to the jointing or connecting process, the entire process of both jointing high voltage cables and connecting dry mateable connectors must be carried out in a dry environment. For cable replacement - the overall length of the cable section which would need to be prepared within the dry environment for a high voltage cable repair coupled with the need to introduce new cable components and new sections of cable into the chamber while maintaining a dry environment, makes a single chamber option inoperable. As such, in order to perform high voltage cable repairs or jointing or both, and in order to perform dry mateable cable connections, a connectable modular chamber apparatus according to the present invention was developed to resolve the problems of the prior art.

The prior art was also limited in glove design and visibility within the habitat. Increased dexterity is necessary in order to carry out fibre optic splicing of high voltage cables due to the more complex nature of high voltage cables (in particular multiple cores of a larger diameter and thus a larger bending radius). Gloved divers cannot achieve the required level of dexterity due to the need to maintain the glove at a certain pressure throughout operation by allowing the partial filling of the inside of the glove which makes the gloves cumbersome and reduced functionality.

Further relevant prior art is known from the disclosures of US2020/377184A1, CN 116598945A, and US2014/056648A1.

The present invention is modular in form and designed to join together and separate underwater, whilst maintaining at least one dry environment thus making it possible to work on the cable from three different aspects. This separating and reattaching function is a dramatic and inventive improvement on the prior art, based on an innovative and complex geometric feature of a curved door, which allows divers to efficiently and comfortably execute a high voltage or low voltage cable repair within the modular repair chamber.

### SUMMARY OF INVENTION

According to a first aspect of the invention, there is provided a modular apparatus for high and low voltage submerged cable interventions comprising at least two units, each unit comprising;
a base shell, a top shell and at least two side plates which combine to create a sealed internal space;
wherein the side plate located at a distal end of the unit allows cables to pass through the exterior of the unit into the internal space; and the side plate on the proximal end of the unit is a moveable curved door which sits in line with a longitudinal axis of the base shell when the curved door is in the open position, and which is moveable into a side orientation thus sealing the proximal end when it is in a closed position,
so that initial cable interventions can be carried out in the sealed internal space of each unit and thereafter the two units can be brought together with proximal end sealed to proximal end to enable the two curved doors to open to form a combined internal space with a minimal distance between the outer edges of the two curved doors.

Preferably, the apparatus comprises a partial floor within the internal space wherein each curved door sits in line with a longitudinal axis of the base shell and under the partial floor when the curved door is in the open position, and each curved door is moveable from under the partial floor into a side orientation when the curved door is in the closed position.

Preferably, the apparatus comprises a cradle onto which the base shell and top shell of the at least two units are positioned so that they can be moved within the cradle to facilitate joining or separation of the units.

Preferably, the internal space comprises a pressure differential with respect to the exterior of the apparatus.

Preferably, the apparatus comprises a gas supply or gas tank for differential pressure control means.

Preferably, the pressure differential is in the range of 0mbar - 100m Bar for cable intervention activities.

Preferably, the pressure differential is in the range of in the range of 5mbar to 1 bar for purging activities.

Preferably, the apparatus comprises at least one viewing port.

Preferably, the apparatus comprises at least one access port.

Preferably, the apparatus comprises gloves and gauntlet seals for use in conjunction with the at least one access port.

Preferably, each curved door is movable by means of a rack and pinion arrangement, with the rack being provided along an edge of the curved door and the pinion being operable by a manual handle or electric motor.

Preferably, access plates are provided to selectively cover access ports.

Preferably, the side plate includes cable seals.

Preferably, the side plate comprises fabricated shims to house the cable seals.

There is also provided a method of performing cable interventions in subsea environment comprising the steps of:
providing at least a first modular apparatus for high and low voltage submerged cable interventions according to any preceding claim on the seabed;
inserting a cable end within the modular apparatus and evacuating the interior space;
preparing the cable end for cable intervention such as jointing, adding connecters etc;
providing an item for cable intervention such as new cable end, a new section of cable, an induction bank etc, within a second sealed modular apparatus on a vessel; deploying the second sealed modular apparatus to the seabed and positioning it adjacent to the first modular apparatus such that first and second modular apparatus are connected to each other;
opening the curved doors of both the first modular apparatus and the second modular apparatus in order to form an extended interior space in which the cable intervention can take place within a dry environment; and
performing the cable intervention in the substantial absence of a wet environment.

### BRIEF DESCRIPTION OF DRAWINGS

Embodiments of the present invention will now be described with reference to the accompanying drawings, in which:
Figure 1 illustrates a perspective view of an apparatus according to the invention;
Figure 2 illustrates an exploded perspective view of the apparatus of Figure 1;
Figure 3 illustrates a plan view of the apparatus of Figures 1 and 2;
Figure 4 illustrates a side view of the apparatus of Figures 1 - 3;
Figure 5 illustrates a side view of the apparatus of Figures 1 - 4 showing a side plate;
Figure 6 illustrates a perspective view of a base shell and a top shell of the apparatus;
Figure 7 illustrates a perspective view of a unit of the apparatus according to the invention where features such as a handle, a closed curved door and viewing ports are shown;
Figure 8 illustrates a perspective view of the unit of Figure 7 wherein the curved door is in a partially open position;
Figure 9 illustrates an exploded perspective view of an assembly of the apparatus in a four unit configuration;
Figure 10 illustrates a gantry frame cradle according to the invention;
Figure 11a illustrates two cradles in accordance with the invention and a continuous length of cable which has been positioned within the cradle;
Figure 11b illustrates the cradles of Figure 11a wherein the cable has been cut at the approximate location of a cable fault;
Figure 12 illustrates a high voltage cable with its constituent cores A,B and C separated from each other in preparation for insertion into a side plate;
Figure 13a illustrates the cradle of Figure 11a with cantilever rails fully extended in readiness to receive base shells and top shells;
Figure 13b illustrates the cradle of Figure 11a with base shells and top shells positioned on cantilever rails;
Figure 14a illustrates the cradle of Figure 11a wherein the base shells have slid into place under the cable via the rails and the tops shells have been moved into position above the cable;
Figure 14b illustrates the cradle of Figure 14b wherein the base shells and top shells are moving up along the cable into their final position for cable interaction activity;
Figure 15 illustrates cut sections of cables A and B which is located inside the apparatus;
Figure 16 illustrates two apparatus units which are in contact with each other;
Figure 17 illustrates the cradle of Figure 11a after the section of faulty cable has been removed, where the units are separated from each other and one unit on each cradle is recovered back to the vessel;
Figure 18 illustrates the section of faulty cable being recovered to the vessel between the two units as shown in Figure 17;
Figure 19 illustrates an alternative side plate, which is known as a blank plate, which is fitted to the proximal end of a unit;
Figure 20 illustrates a unit wherein the curved door is in the closed position;
Figure 21 illustrates cables A and B which have been prepared for cable intervention wherein the sheaths and insulation of the cables have been stripped back in order to expose the cable cores;
Figure 22 illustrates the deployment of a new section of cable between two units, to replace the section of faulty cable which was removed from the continuous line of cable, wherein the cradle is again used to position each of the units on their respective cradle so that they can be aligned for contact with the unit already on said cradle;
Figure 23 illustrates the final position of the new section of cable which has been deployed as per Figure 22;
Figure 24 illustrates a gauntlet system and wrist sealing system of a dry suit for use with the apparatus;
Figure 25 illustrates a glove connected to the wrist sealing system and outlet hose connected to bilge pump which is connected to an outlet flow valve;
Figure 26 illustrates the end flange for cable insertion including a cable gland for inserting power cable core;
Figure 27 illustrates the end flange for cable insertion with seals and fabricated shims;
Figure 28 illustrates a perspective view of the apparatus sitting on the cradle;
Figure 29 illustrates side view of the apparatus of Figure 28;
Figure 30 illustrates a front view of the position and gears of the curved door in the open position inside the apparatus according to the invention;
Figure 31 illustrates a front view of the position and gears of the curved door in the closed position inside the apparatus;
Figure 32 illustrates a front view of the position of the curved door in the open position inside the apparatus;
Figure 33 illustrates a perspective sectional view of the curved door in the closed position underneath a grating floor of the apparatus;
Figure 34 illustrates a perspective view of the curved door in the closed position underneath a grating floor of the apparatus; and
Figure 35 illustrates a perspective view of a unit of an assembly of the apparatus in a two unit configuration.

The following is a list of the component parts used in the following description.

| NUMERALS | COMPONENT |
|---|---|
| 100 | Apparatus |
| 2 | Unit |
| 4 | Base Shell |
| 6 | Top Shell |
| 8 | Internal Space |
| 10 | Simple Cradle |
| 12 | Rails |
| 14 | Distal End |
| 16 | Proximal End |
| 17 | Motor |
| 18 | Side Plate |
| 19 | Access Plate |
| 22 | Base Side Part |
| 24 | Top Side Part |
| 26 | Cable Port |
| 27 | Cable Seal |
| 28 | Curved Door |
| 29 | Flange |
| 30 | Handle |
| 31 | Valve |
| 32 | Tooling Box |
| 34 | Cameras |
| 36 | Grating Floor |
| 38 | Lights |
| 42 | Purging Means |
| 44 | Lifting Eye |
| 50 | Rack |
| 52 | Pinion |

### LETTERS

- A, B and C: Cables

### DETAILED DESCRIPTION OF DRAWINGS

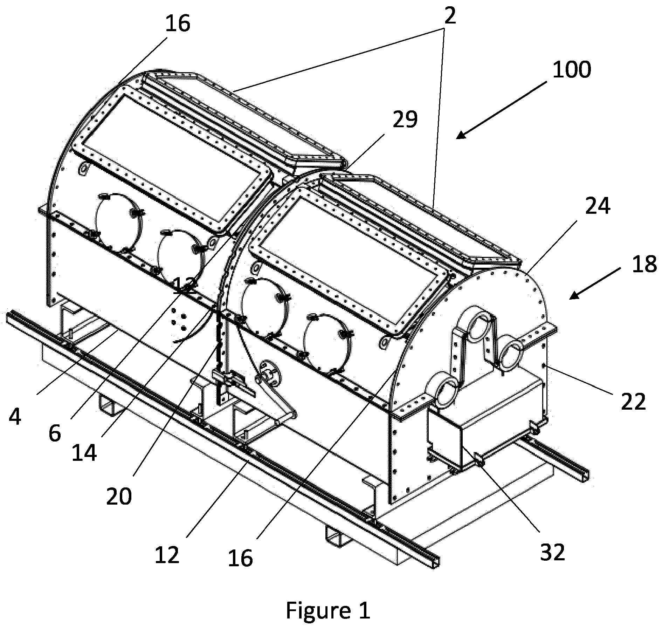

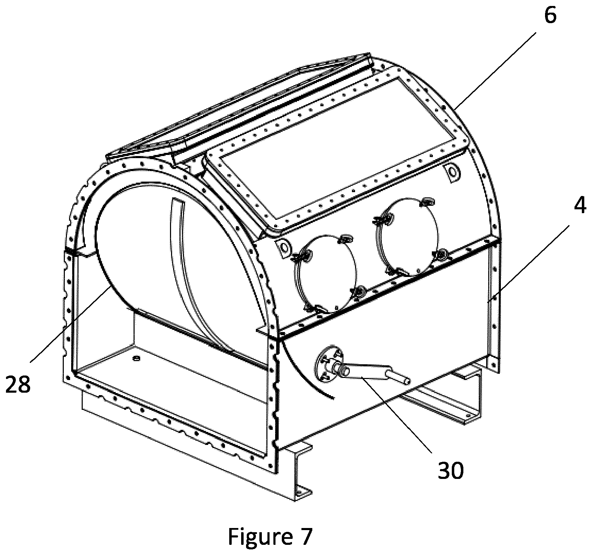

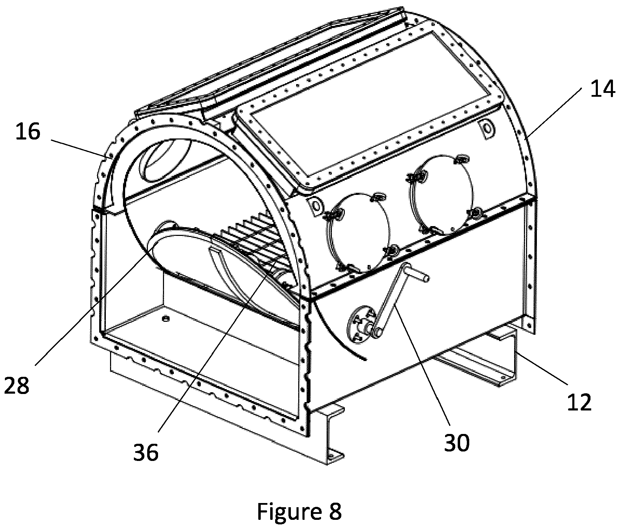

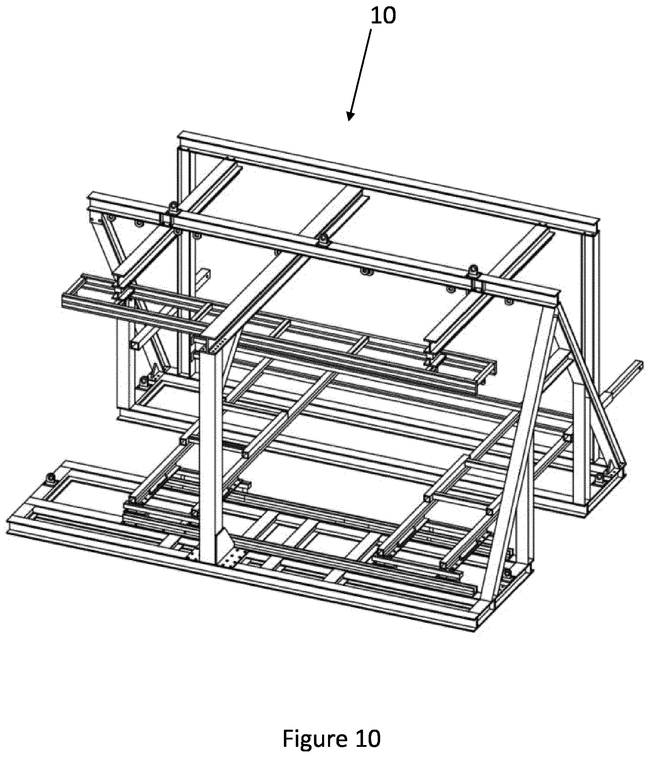

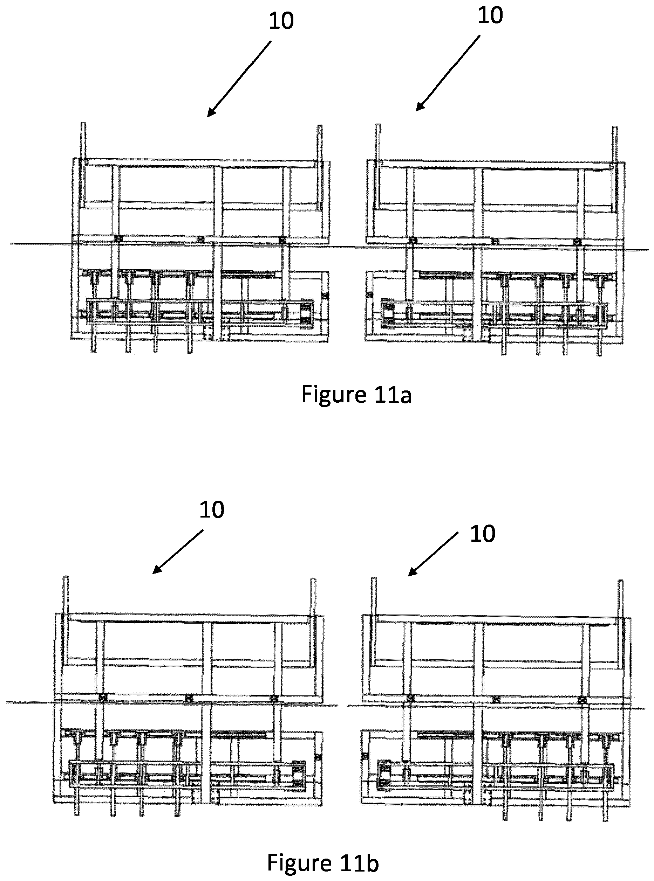

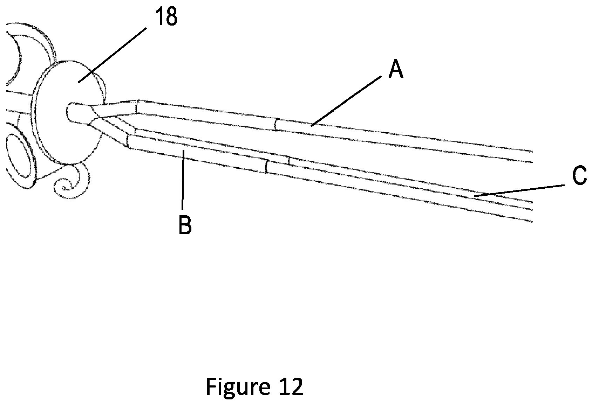

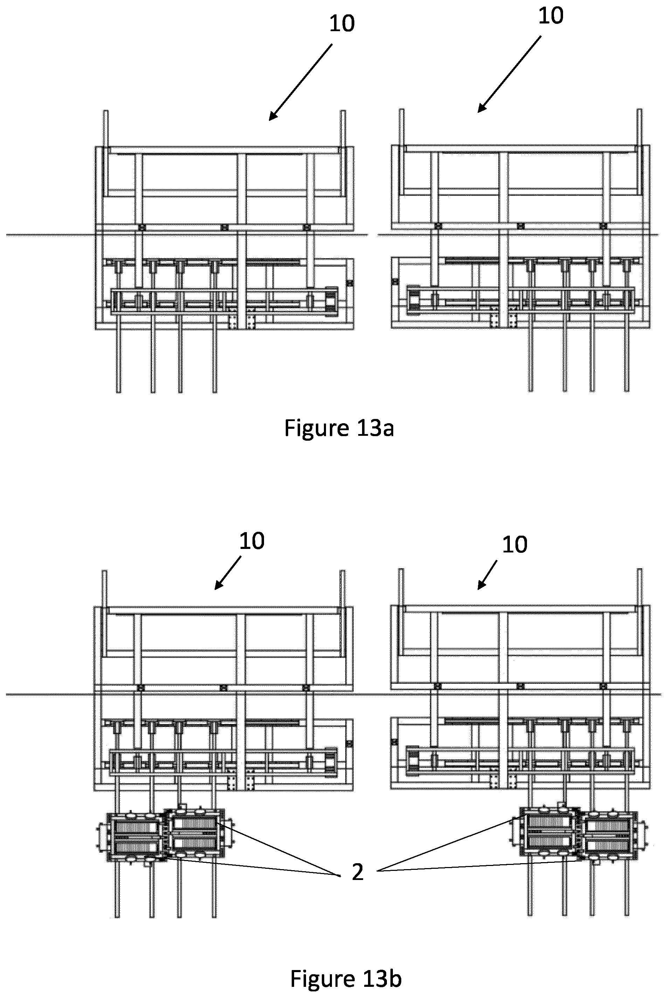

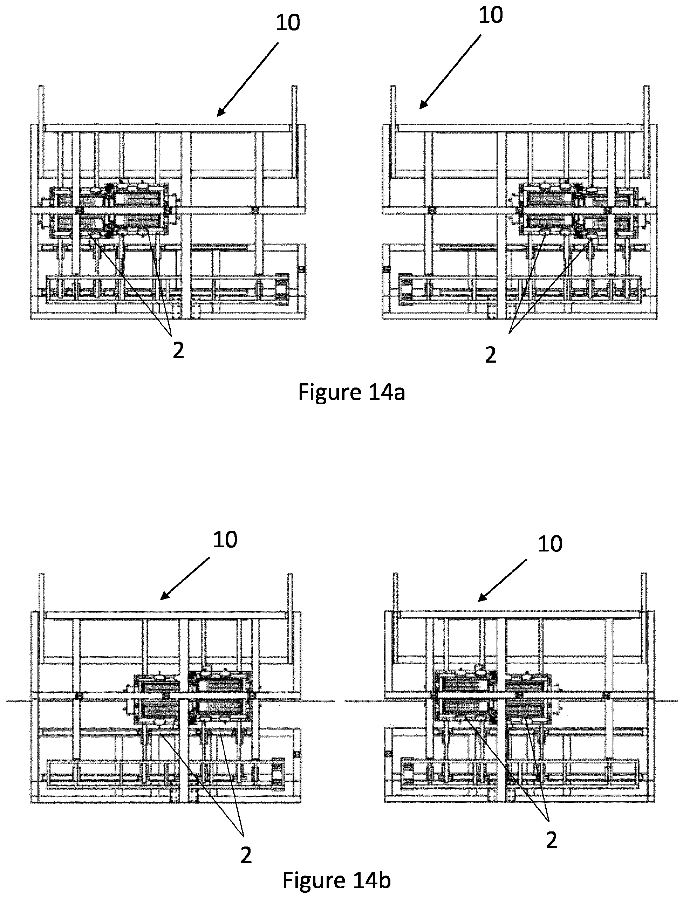

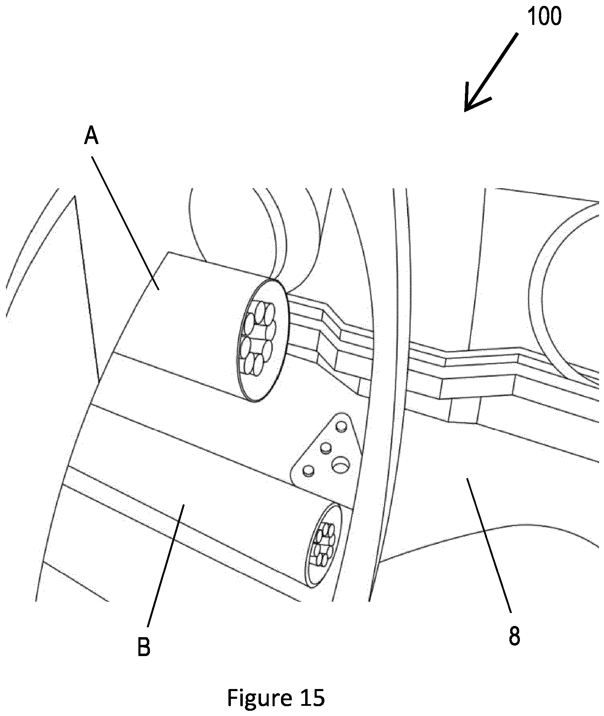

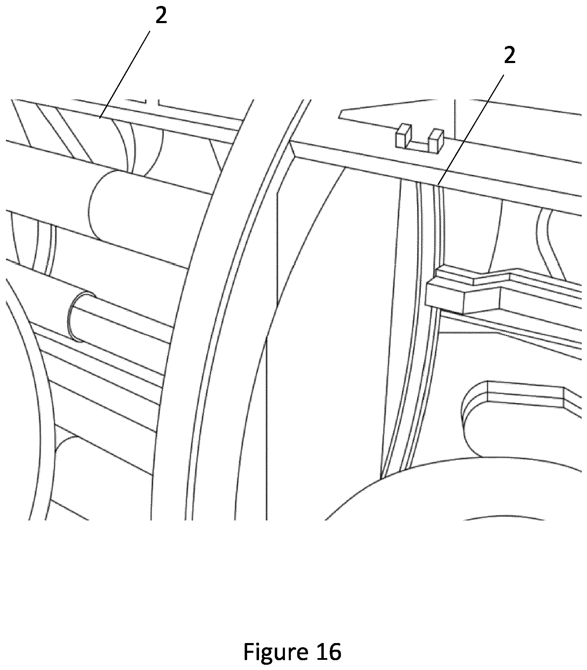

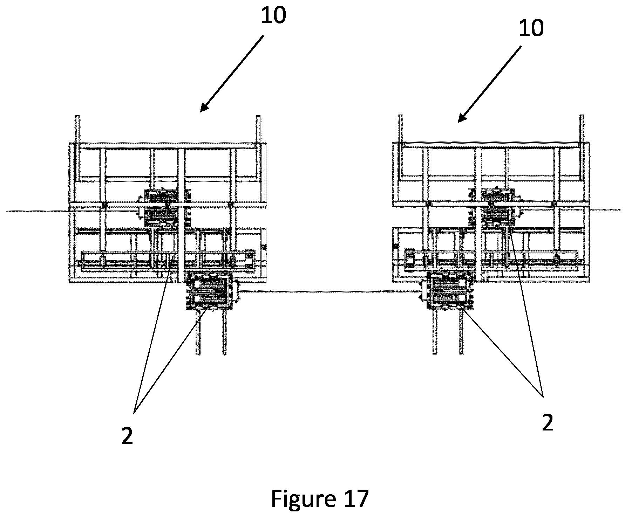

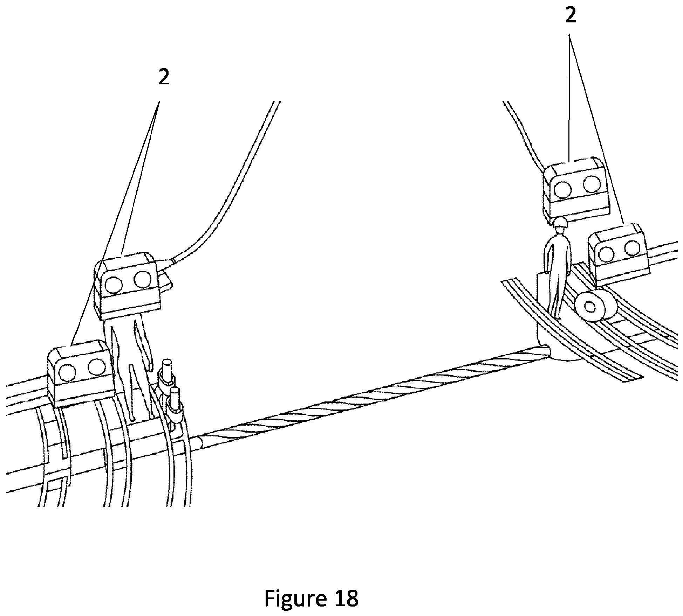

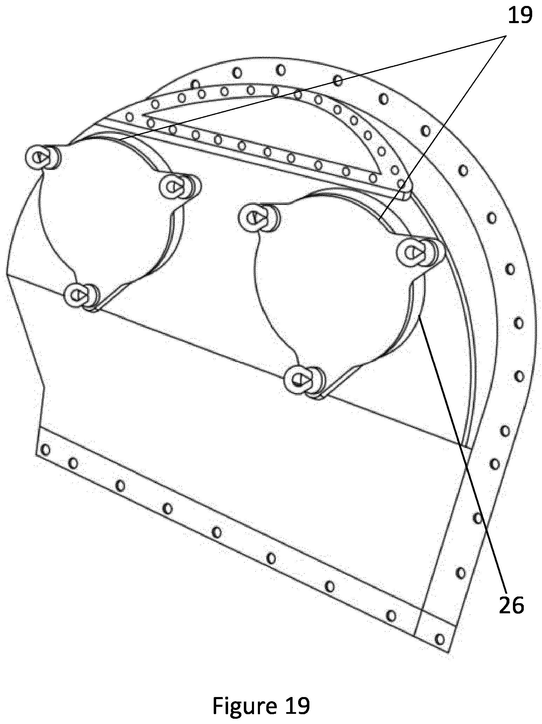

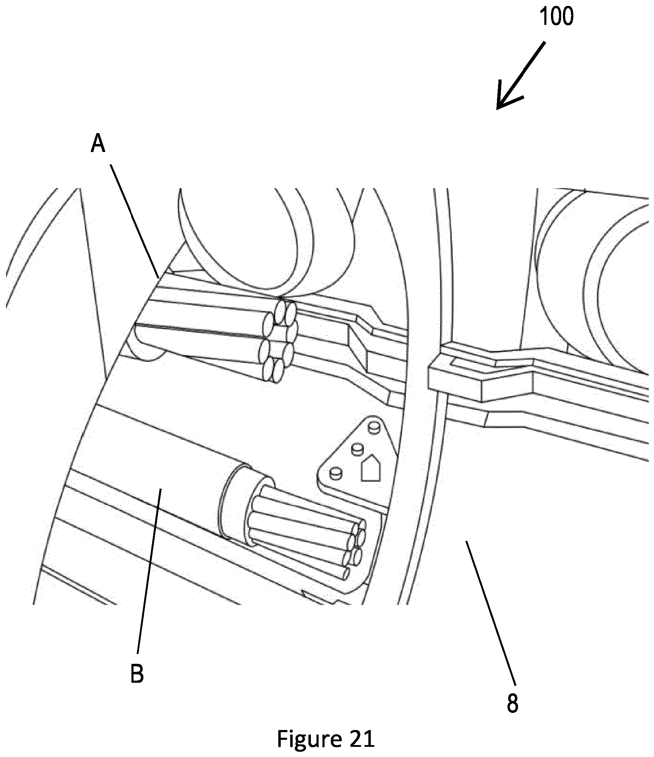

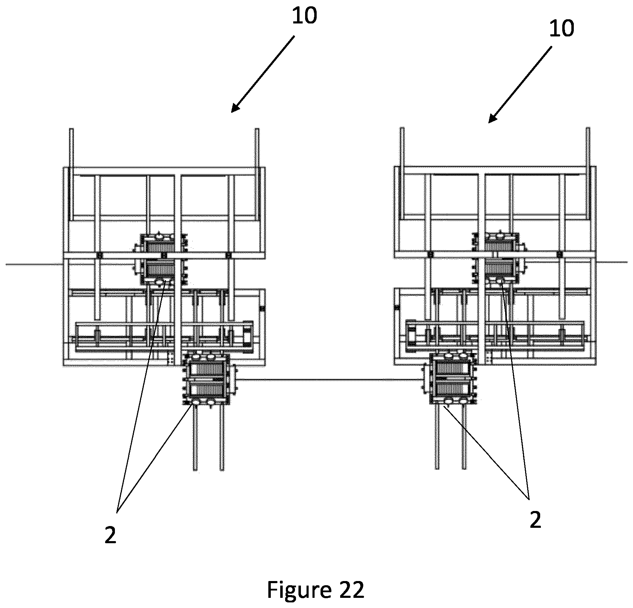

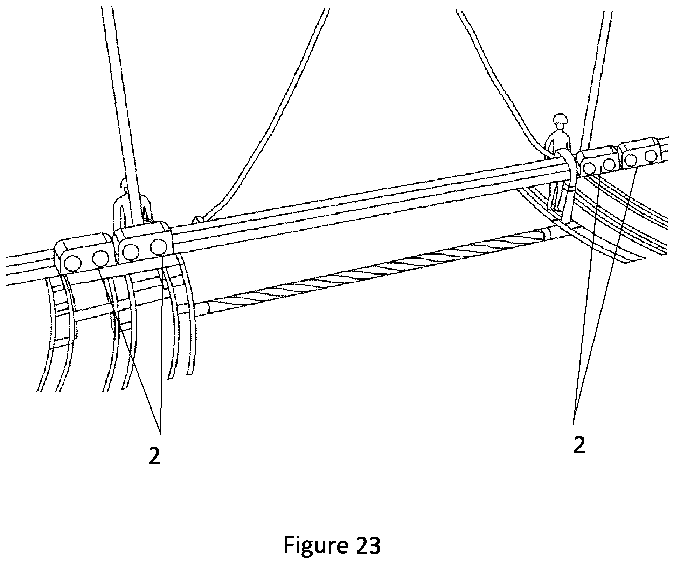

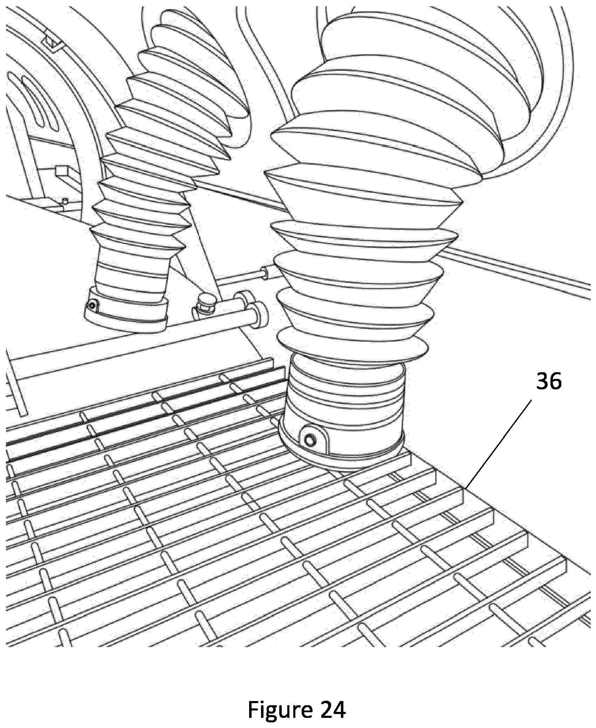

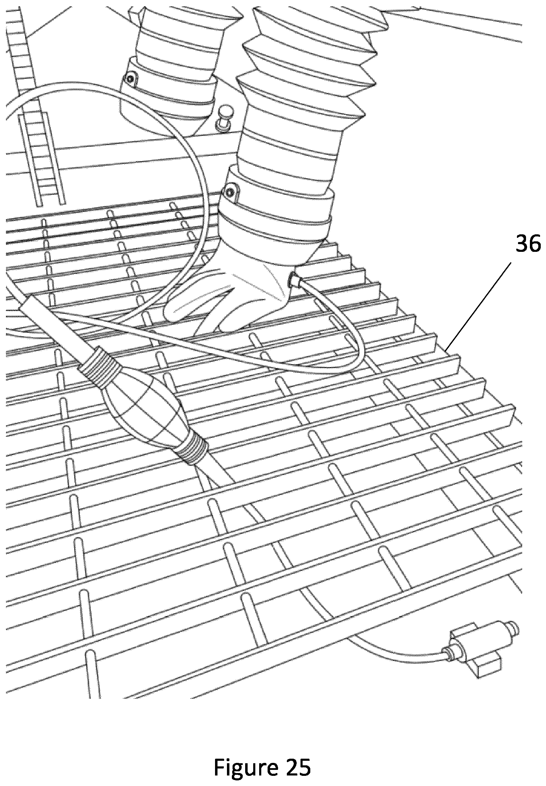

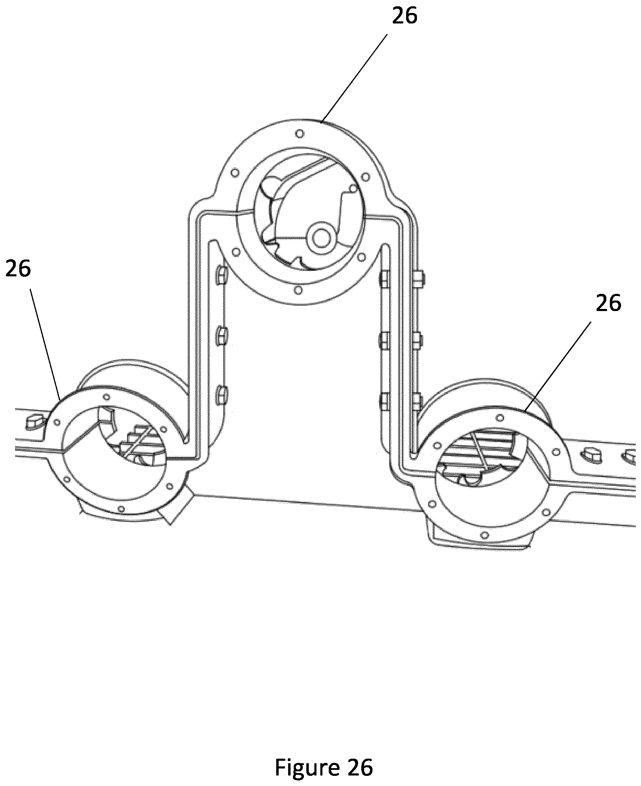

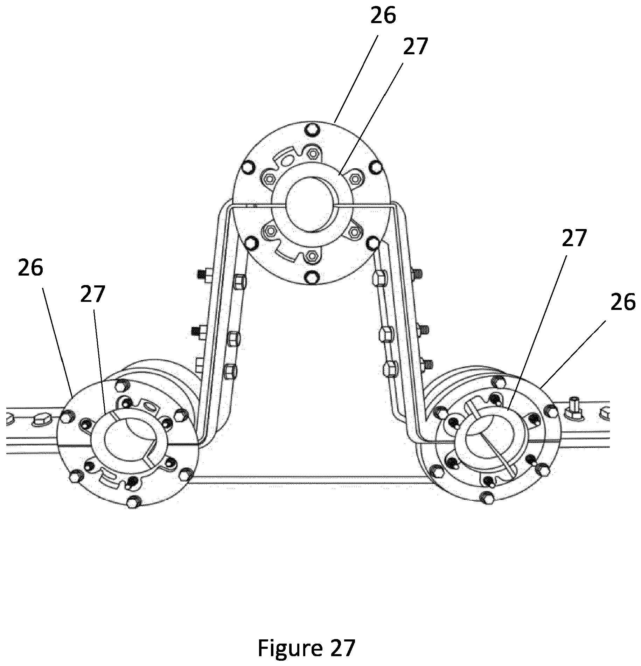

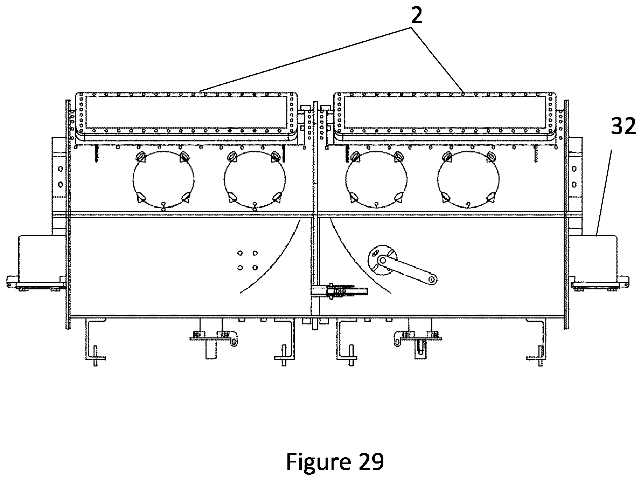

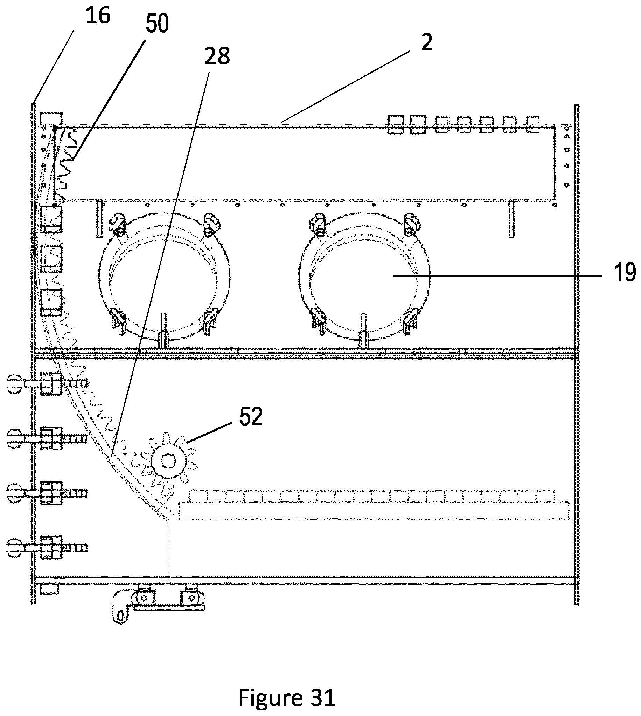

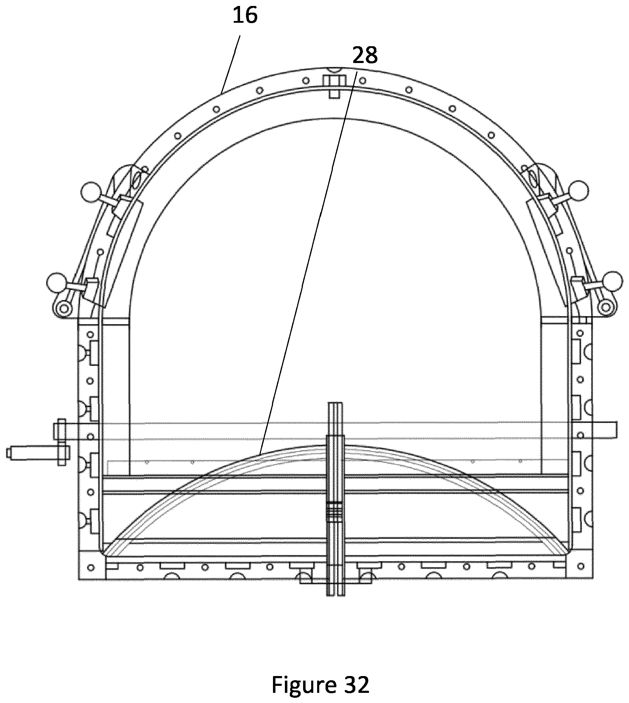

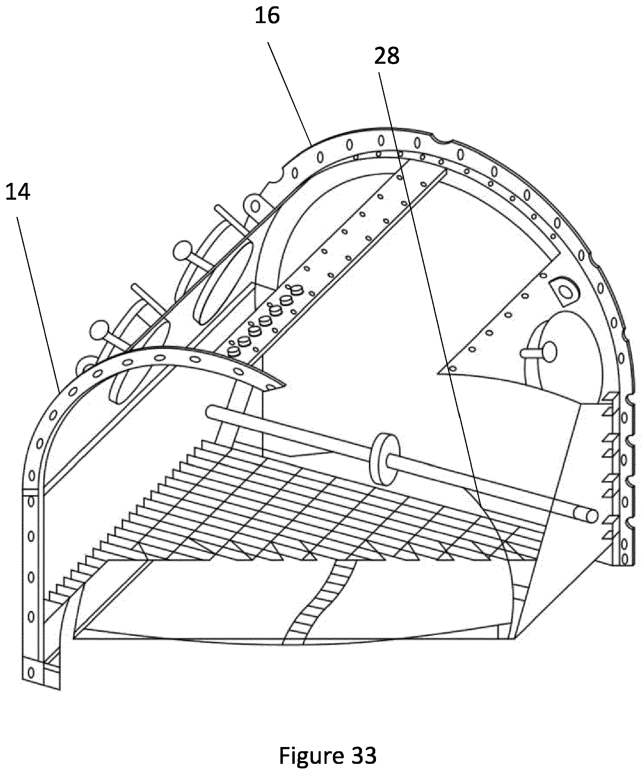

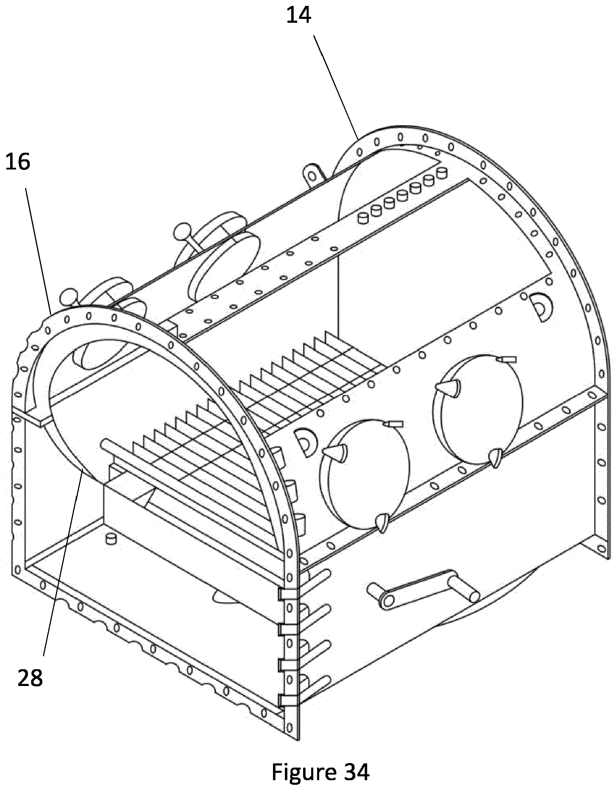

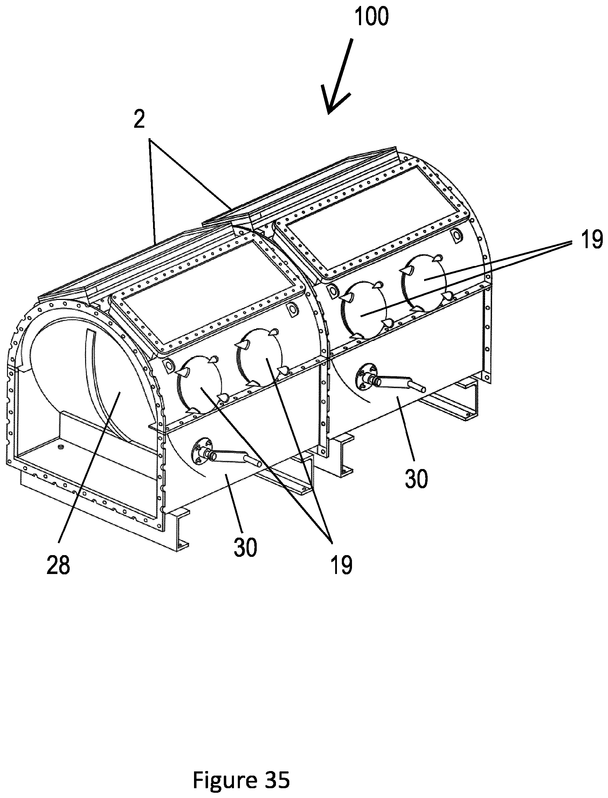

Referring now to Figures 1 to 35 of the accompanying drawings, there is illustrated a first embodiment of an apparatus, generally indicated as 100, which provides a habitat for low, medium or high voltage subsea cable intervention, such as jointing or connection activities.

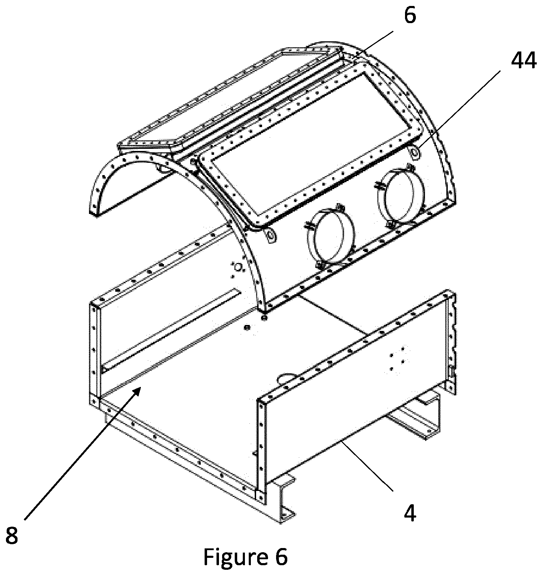

As shown in Figure 1, the apparatus 100 comprises at least two units 2. Each unit comprises a base shell 4 and top shell 6, which are fixed together to form an internal space 8 therebetween. The base shell 4 and the top shell 6 may be fixed together with a latch, through welding, or with nuts and bolts as shown in Figures 6, 7, 8 and 9. A seal is provided between the base shell 4 and the top shell 6. Preferably the seal is a neoprene or cork gasket strip.

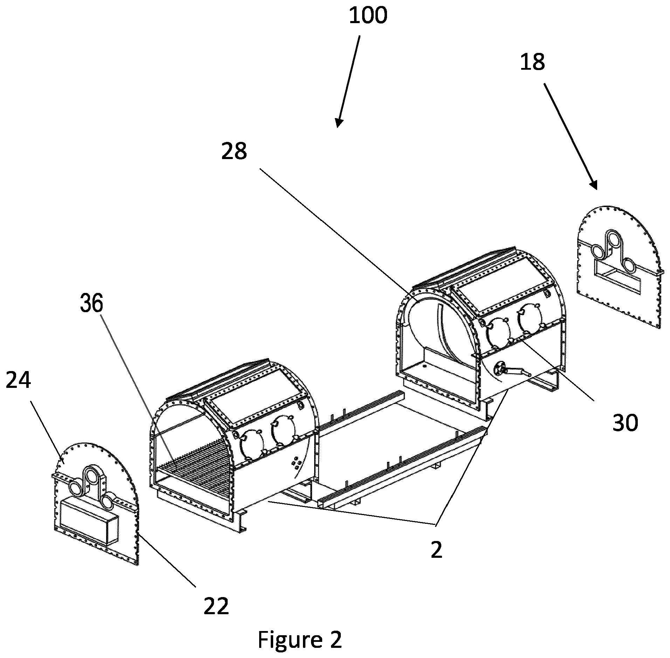

As shown in Figure 2, the base shell of each unit 2 is configured to sit on a rail or a set of rails. Each set of rails comprises at least two rails which are parallel to each other. The rail or set of rails are part of a large A frame structure which is known as a cradle 10. In some circumstances, a simple cradle 10 is sufficient for the purposes of positioning and/or retaining a unit 2 or an assembled multi part unit 2. A simple cradle may comprise cantilevered rails on which structures can slide but it does not comprise a lifting means. In other circumstances, a gantry functionality is required on the cradle 10 in order to be able to lift, drop, move, slide and replace part of units, such as for example holding a top shell 6 while the base shell 4 is positioned correctly and thereafter lifting and dropping the top shell 6 so that it sits on top of the base shell 4. Each base shell or unit 2 can be positioned on a rail or set of rails and thereafter slide along the set of rails to reach a desired position.

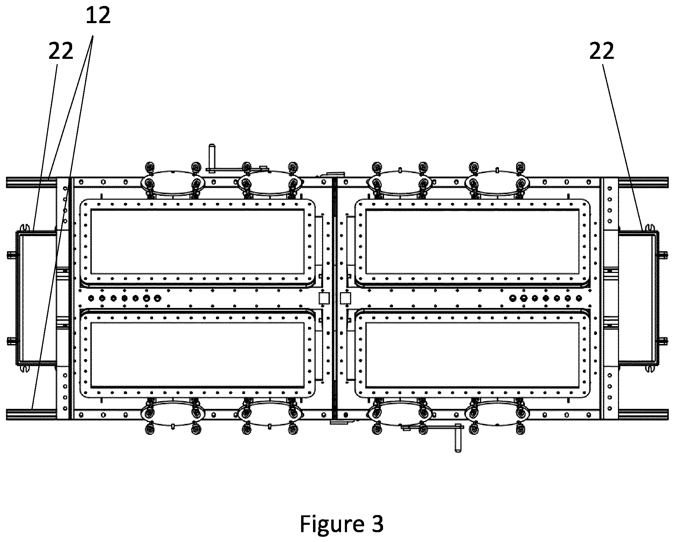

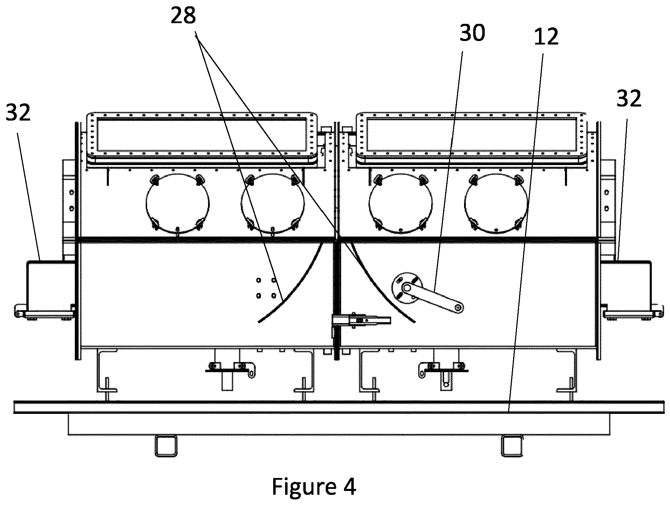

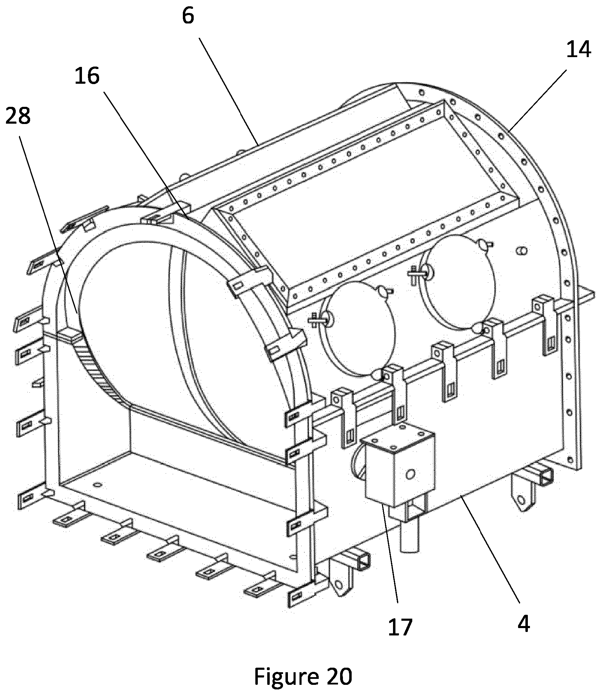

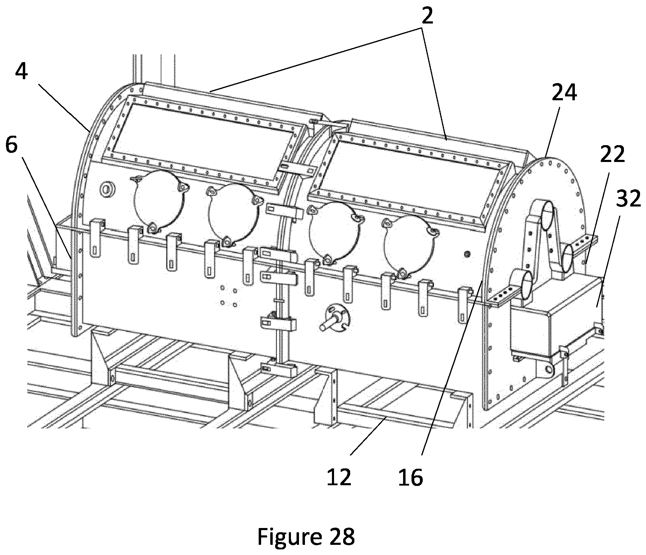

Cantilever rails allow for additional movement of the base shells 4 and units 2. The gantry functionality of the cradle allows items to be lifted and lowered within the cradle. As shown in Figure 3 and Figure 4, the rail or set of rails 12 may be used to align units 2, such that at least two units 2 achieve a sealable fit when they are positioned on the rails 12 and brought in contact with each other. The at least two units 2 can then be connected to each other in order to form an extended intervention chamber through use of quick connect latches as shown in Figure 20 and 28 or a plurality of nuts and bolts or various welding techniques or a combination of any of the aforementioned connection methods. A seal is provided between each of the units 2. Preferably the seal is a neoprene or cork gasket strip. Preferably, each unit 2 has a length of 5 metres, 4.5 metres, 3.5 metres, 3 metres, 2.5 metres or 2 metres.

When the cradle 10 incorporates a gantry functionality, the base shells 4 can be positioned on the rail 12 and the top shells 6 can initially be positioned on the upper gantry element. This allows the base shells 4 to be positioned on rails 12 of the cradle 10 and then a cable can be moved into position by placing the cable on top of the open base shells. The top shells 6 are then positioned on the upper gantry elements of the cradle 10 and then slid or lifted in place on top of the base shells 4 which means that the cable is now situated in the internal space 8 defined by the base shells 4 and top shells 6. This system of installation allows the unit 2 to essentially be assembled around the cable in a subsea environment while the cable is still intact. In certain conditions, when it is possible to position the gantry cradle very close to the cable to be repaired, it means that the cable is moved very little and with extremely low interference in order to place it within the unit, which represents a vast saving in time and resources rather than the traditional method of recovering the cable to surface water level or indeed even cutting the cable and threading both ends of the cable through a habitat system independently.

The intervention chamber may comprise several units 2, for example two combined units, three combined units or four combined units. Each unit 2 comprises a distal end 14 and a proximal end 16. The placement of the proximal end 16 of the unit 2 is dependent on the activity in question.

In instances where a unit 2 is simply being extended into an extended intervention chamber, the proximal end 16 of one unit 2 will be in contact with the distal end 14 of the next unit 2, thus leaving the distal end of one of the units at the end of the two unit assembly.

In instances where a first unit 2 and a second unit 2 are required for independent use, as two separate assemblies, prior to being joined together to form one large assembly, such as for example for connecting two ends of a cable together, then it is necessary that the first unit 2 is arranged such that a proximal end 16 of the unit 2 faces outward in the direction of the second unit 2. Similarly, the second unit 2 must be arranged such that a proximal end 16 of the second unit 2 faces outwards in the direction of the first unit 2. In this arrangement, when the first unit 2 and second unit 2 are brought together, they will be joined to each other at the proximal ends 16 of both units 2. These assemblies could also be extended into extended intervention chambers by adding further units 2 to one or both of the first unit 2 and the second unit 2.

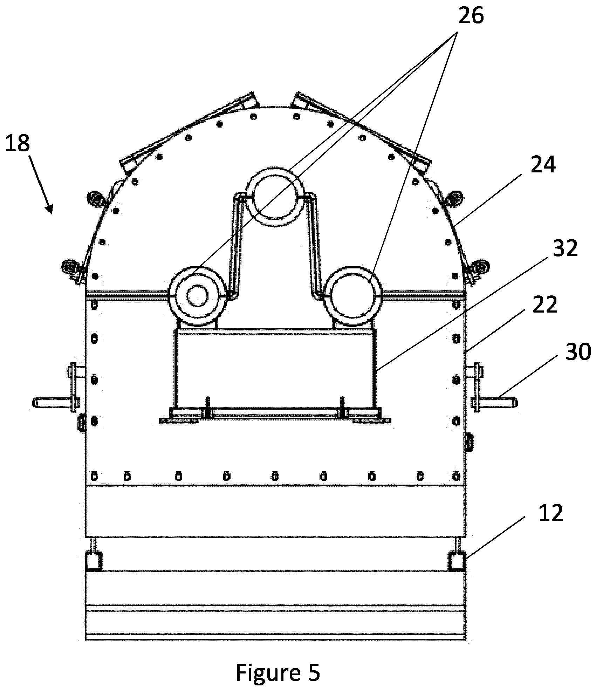

In order to seal the interior space 8, it is necessary to provide at least one side plate 18 at each end of the unit 2. The side plate 18 can be attached to one or both of the base shell 4 or top shell 6. The design of the side plate 18 may differ depending on the anticipated repair procedure and what features are required. For example, some repair procedures may require a side plate 18 with one cable access point, or port, for low voltage cable types, whereas other repair procedures may require a side plate 18 with multiple cable access points, or ports, for high voltage split phase cables such as three cable access points or ports. In addition, one side plate 18 may be provided as a separate member which can be applied to the unit 2 whereas, as shown in Figure 5, another side plate 18 may be formed of two separate parts with a base side part 22 which can be attached the base shell 4 and a top side part 24 which can be attached to the top shell 6. As shown in Figures 1, 2 and 5, in the preferred embodiment, a first side plate which is suitable for application to the distal end of the side plate 18 comprises the two separate parts 22 and 24 which together form one entire side plate 18, although it will be appreciated that the side plates 18 can alternatively be made of up only one part which extends from the base shell 4 to the top shell 6. In the preferred embodiment, the base side part 22 is a substantially rectangular plate like structure. In the preferred embodiment, the top side part 24 is a substantially semicircular plate like structure. Both the base side part 22 and the top side part 18 can be bolted directly onto a flange 29 which is provided on both the distal end 14 and the proximal end 16 of each unit 2. The flange 29 on the distal end 14 or the proximal end 16, or both, may be continuous about the perimeter of the distal 14 end or proximal end 16 of the unit 2 or it may be discontinuous, wherein several independent flange lips are provided in strategic locations about the perimeter of the distal 14 or proximal end 16 of the unit 2.

The side plates 18 are designed to incorporate power cable core entry into the internal space 8 via a through hole in the side plate 18 which is known as a cable port 26. The cable port 26 comprises a fabricated gland shim onto which a cable seal 27 is fitted. The cable seal 27 allows the cable to slide through cable port 26 while maintaining a seal and thus preserving the integrity of the inner atmosphere of the internal space 8. In the preferred embodiment, the cable seals are Roxtec^{®} seals. The seals could alternatively be one of any number of types of polyurethane or polyethylene or rubber based seals. The gland shim is required in order to secure the cable seals 27 in the cable ports 26 while the cables are moving through the cable ports 26. The gland shims are designed for both the interior and exterior of the apparatus 100. The gland shims facilitate the maintenance of a positive pressure within the internal space 8 while the cable is moving through the gland shims and cable seals 27. The ability of the cable to freely move within the glands shims and cable seals 27 during the jointing process is a critical aspect of the design as it allows any component assembly along the cable section to be positioned in an optimum position within the internal space 8 which allows the diver to work efficiently and comfortably.

The dexterity required for high voltage cables means that divers must have the ability to remove the gloves from their hands so that they can carry out a cable jointing or repair within the apparatus without the limitation of the gloves. Unlike the prior art which required gloves to be worn by divers continually during repair, the present invention utilises a dry suit cuff sealing system which enables the diver to remove the glove at a certain point during the operations as a seal is formed around the divers' wrists which prevents the apparatus from becoming depressurised through the glove outlets.

According to the present invention, the gloves are only utilised when a diver is inserting or removing their hands from the internal space. In use, a seal within the glove system is formed around the diver's wrists to maintain a dry environment in the internal space. The present invention incorporates a dry glove dive suit system with an innovative glove non return pump system. Access ports on at least one side of each top shell allow the glove system to be attached to the unit. In order for the water contained within the glove and the outer environment from entering the apparatus, a one-way pump is connected to the glove to pump any excess water out of the glove before it is removed. The one-way pump acts as a non-return valve so no water can enter the glove from outside the apparatus.

A typical use case for glove use is provided below as an example. It will be appreciated that the use of the gloves is not limited to this methodology and further steps and methodologies are possible without departing from the scope of the inventive concept.

The gloves are provided for use in a subsea environment, where the differential pressure within the internal space 8 for cable intervention activities has been lowered to a range of 0mbar - 100mbar. In order to access the gloves, the access plates 19 which cover the access ports must be opened or removed, thus exposing the internal gauntlets and gloves. As an arm of a diver is inserted into each gauntlet and pushed towards the glove and wrist seals, the water within gauntlet is displaced. Each hand of the diver is pushed through the rubber seal within the gauntlet and into the glove such that the rubber seal forms a watertight barrier around the divers arm, thus preventing further water ingress beyond the diver's wrist into the glove. Once both the diver's arms are inserted into the gloves, the pressures are stabilised again. A one-way pump is connected to each glove individually and an outlet on the apparatus 100 is activated by the diver to displace any water within the glove to the outside of the apparatus 100. The internal arm seal prevents water ingress into the internal space 8 when the gloves are being disconnected from the gauntlet at the dry suit cuff system. Once all the water is displaced from the gloves, the diver can remove each glove, one at a time, utilising the dry cuff sleeve system. The diver's hands are now free to work unhindered within the apparatus 100. This process can be repeated by another diver, or the same diver, on the other side of the apparatus 100.

When the diver is withdrawing their arms from the internal space 8 it is necessary to first place the gloves over the divers' hands and then reconnect the gloves to the gauntlet using the dry suit cuff system. The diver then withdraws a first hand out of the glove and gauntlet sleeve with the assistance of the diver's other available hand which is still within the internal space 8. The diver then places their second hand into a tool within the apparatus, which may preferably be a u-shaped tool, which holds the sleeve in place in order to allow the diver to withdraw their second hand. Once the diver has withdrawn both hands from the internal space 8, the access plates 19 over each access port are secured to prevent the gauntlet/ gloves blowing out through the access ports during over pressurising or purging operations.

Visibility within the apparatus is of paramount importance for high voltage and low voltage applications. The viewing ports of the present invention are not only larger than those of the prior art but their position within the apparatus has also been redesigned. The viewing ports have been integrated into the apparatus at an angle such that the viewing ports are in line with, and located at an intermediate position between, the centre of the working areas inside the apparatus and the divers head when the diver's body position is constrained by the diver's arms being sealed within the glove system. This calculated position of the viewing ports significantly increases the ergonomic suitability for a diver when viewing the inside of the apparatus and presents a substantial improvement over the prior art.

An innovative feature of the present invention allows a diver to adjust the helmet free flow valve from within the apparatus. This is an important feature of the apparatus as it maintains clear visibility for the diver throughout the cable repair process.

One or more cameras 34 are provided inside the internal space 8. The one or more cameras 34 ensure that activity within the internal space 8 can be monitored remotely. One or more lights 38 may be provided within the internal space 8. One or more mirrors may be provided within the internal space 8 to facilitate visibility of views that are partially concealed from the camera's direct line of vision.

A tooling box 32 may be provided on at least one side plate such that tools and other items can be introduced into the internal space as required.

As shown in Figure 2 and Figure 4, in order to combine at least two separate units 2 subsea, each unit 2 also comprises a curved door 28. The door 28 is located at the proximal end 16 of the unit 2 and the door 28 may be activated by a handle 30 which is provided on the exterior of the unit 2. Alternatively, the door 28 may be activated through means of a motor 17 which is located on the exterior of the unit 2 as shown in Figure 20. The motor 17 may be controlled remotely from a processing unit which is located on a vessel or platform or onshore.

The curved door 28 of the present invention represents a significant innovative advancement of the technology. The curved door 28 design enables the internal space of one unit 2 to be combined with the internal space 8 of another unit 2 in order to bring two cable ends within different units 2 together and to create a larger working area by combining the two internal spaces 8 whilst maintaining a dry environment around the cable. The angle of curvature of the curved door 28 means that in its open position the curved door 28 is stowed at a low level (such as for example under a grating floor 36) within the internal space 8 and in its closed position, the curved door 28 completely seals one end of the unit 2.

The curved door 28 is designed such that the curved door opens and closes without significantly compromising the internal space 8 of the unit. The curved door 28 can be activated to open or close while a side plate 18 is fixed on the proximal end 16 of the unit 2. In the closed position the curved door 28 acts as a side plate 18, and no further side plate is required on the proximal end 16 of the unit 2.

The angle of curvature of the curved door 28 allows the units 2 to connect to each other with minimum separation distance between the internal cable cores on each side of the curved door 28. This curved door 28 feature minimises the size of the internal space 8 required, by minimising the size of a cable connection ferrule required which thus impacts the size of a cable joint. When two units 2 with closed curved doors 28 are brought together, it is necessary to evacuate the space between the two curved doors 28 before the curved doors 28 can be opened, in order to maintain the integrity of the dry interior space 8 of each unit 2.

In addition, the curved door 28 is self-contained within the internal space 8 in order to avoid any potential snagging or drag issues when deploying or recovering the apparatus 100. In the preferred embodiment, the curved door 28 is operable remotely (from a vessel on the surface of the sea). Alternatively, in a less optimal scenario, the curved door 28 could be operable through means of a handle 30 which is located on the exterior of the unit 2.

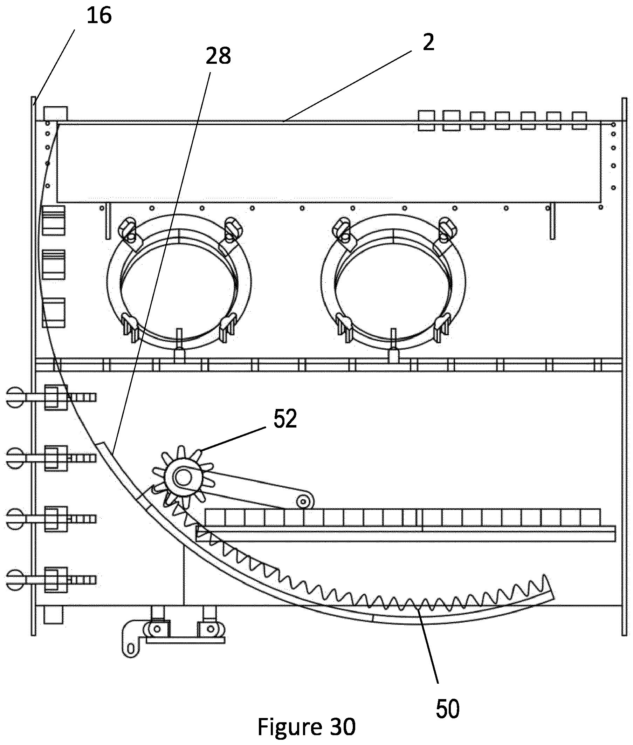

The mechanism which enables the curved door 28 to move into an open or closed position is a rack 50 and pinion 52 arrangement (Figure 30) with the pinion 52 being connected to, and operable by, the handle 30 or motor 17. The rack 50 is provided along the edge of the curved door 28 adjacent to the handle 30 or motor 17.

As previously noted, the unit 2 can be deployed already assembled, partially assembled or fully dissembled. In situations where the unit 2 is assembled, each unit 2 is typically filled with water before or during deployment from a vessel, in order to ensure that buoyancy forces, which may vary depending on the amount and type of gas within the interior space 8 at a specific depth, do not unduly interfere with the deployment operation. Once the unit 2 is deployed on the seabed, and the side plates 18 have been attached to the unit 2, the water may be purged from the interior space 8. The water is purged from the interior space 8 through means of a purging means 42. The purging means 42 may comprise one or more purge gas inlets connected to supply of purge gas through which purge gas can be pumped into the interior space 8. The supply of purge gas may be remote from the interior space 8 (for example a purge gas supply on a surface vessel connected to the unit 2 via a gas line. Additionally, or alternatively, the unit 2 itself may be provided with a gas supply, e.g. a weighted tank. The gas may be air or an inert gas (such as nitrogen). Purging the internal space 8 provides a safe, dry, repair environment and additionally provides some drying effect to the cable being repaired.

Additionally, the purging means 42 may comprise a water pump, for voiding the contained water within the internal space 8 once the unit 2 is assembled.

In embodiments which comprise a purging means 42, the apparatus 100 may also be provided with a purge outlet through which purged water can exit the interior space 8 into the surrounding sea. In its simplest form, the purge outlet is one or more openings in the base shell 4, top shell 6 or side plate 18 of the apparatus 100. In the preferred embodiment, the opening is located on the base shell 4. The opening may be provided with a closure means (for example a cap or lid) which can be used to close the opening once seawater, or other fluid, or gas has been purged from the internal space 8. Several purging means 42 may be required on one unit 2 in order to evacuate all of the interior spaces.

Further embodiments of the invention may include a washing means, to enable the interior of the internal space 8 and the cable being repaired to be washed with a washing fluid (for example fresh water, distilled water or a solvent) capable of removing seawater deposits from the internal space 8 and cable.

In such embodiments, the washing means may comprise one or more washing fluid inlets connected to a supply of washing fluid through which washing fluid can be pumped into the interior space 8. The washing fluid inlet(s) may be provided in one or more nozzles situated in the interior space 8.

Additionally, or alternatively, one or more washing fluid inlet(s) may be provided in directable means (e.g. a gun) enabling the user to direct washing fluid as needed.

The supply of washing fluid may be remote from the apparatus 100, e.g. a washing fluid supply (e.g. a washing fluid tank) on a surface vessel connected to the apparatus 100 via a line. Additionally, or alternatively, the apparatus 100 itself may be provided with a washing fluid supply, e.g. a tank.

The apparatus 100 may be provided with drying means. These may be employed after the interior of the apparatus 100 or cable being repaired is washed and / or purged, to provide a dry repair environment. The drying means may comprise one or more drying gas inlets connected to a supply of drying gas through which drying gas can be pumped into the contained environment. The supply of drying gas may be remote from the apparatus 100, e.g. a drying gas supply (e.g. a gas tank) on a surface vessel connected to the apparatus 100 via a gas line.

Additionally, or alternatively, the apparatus 100 itself may be provided with a drying gas supply, e.g. a weighted tank. The drying gas may be air and / or an inert gas, for example, nitrogen.

The drying gas inlet/s may be provided in one or more nozzles situated in the interior space. Additionally, or alternatively one or more drying gas inlet/s may be provided in directable means (e.g. a gun) enabling the user to direct drying gas as needed.

As will be appreciated, in embodiments of the invention, gas may be supplied to the contained environment within the apparatus 100 in order to purge water therefrom, to dry the interior and/ or to adjust the pressure within the interior space 8. In such embodiments, the purge, drying and / or pressure adjustment gas may be provided from a common supply (e.g. a single tank). Where the common supply is located remotely from the apparatus 100 (e.g. on a surface vessel), the purge, drying and or pressure adjustment gas may be fed to the apparatus 100 via a common line. Further, common inlet/s may function as the purge gas inlet/s, the washing fluid inlet/s, the drying gas inlet/sand or the pressure adjustment gas inlet/s.

To facilitate transport, the base shell 4 or top shell 6, or both, may be provided with a means for attachment by a lifting means, for example lifting rings.

The apparatus 100 comprises at least two units 2. More than two units 2 may be used for situations where a larger length of cable needs to be repaired or more space is needed for the repair procedure. In a three-unit situation, two units 2 (a first unit and a second unit) may be arranged as described above on the rail 12 with both the proximal ends 16 in contact with each other. A side plate 18 is not attached to the distal end 14 of the second unit 5, thus allowing a third unit to be connected directly to the second unit. In this situation, the proximal end 16 of the third unit is in contact with the distal end 14 of the second unit.

The apparatus 100 is provided with differential pressure control means. Such means function to maintain a controlled pressure within the internal space 8 of apparatus 100, once the unit 2 is assembled, so that a wash, purge, jointing or connection activity can be effectively and safely carried out.

The differential pressure control means comprises a plurality of pressure sensors. Preferably, the differential pressure control means comprises a plurality of pressure sensors, with at least one interior pressure sensor which senses the pressure in the internal space 8 and at least one exterior pressure sensor which senses the pressure at the exterior of the apparatus 100. The readings from the interior and exterior sensors enable the differential pressure to be determined, i.e. the difference in pressure between the internal space 8 and the exterior of the apparatus 100.

The differential pressure control means may additionally or alternatively comprise pressure adjustment means which enable a target differential pressure to be achieved.

In embodiments of the invention, the pressure adjustment means comprises one or more pressure adjustment gas inlets connected to a supply of pressure adjustment gas through which pressure adjustment gas can be pumped into the contained environment. The supply of pressure adjustment gas may be remote from the apparatus 100, e.g. a pressure adjustment gas supply (e.g. a gas tank) on a surface vessel connected to the apparatus 100 via a gas line. Additionally, or alternatively, the apparatus 100 itself may be provided with a gas supply, e.g. a weighted tank. The pressure adjustment gas may be air and / or an inert gas for example nitrogen.

Additionally, or alternatively, the pressure adjustment means may additionally comprise venting means, for example one or more controllable pressure adjusting gas outlets which enables gas to be vented from the contained environment to the exterior. One or more of the gas outlets may be provided with a valve. This valve 31 may be configured with a predetermined threshold pressure (that may be fixed or adjustable by a user or by control means) so that pressure is only released from the interior space 8 once a pressure at, or in excess of the target differential pressure in the internal space 8, is achieved. The release of pressure from within the internal space 8 may also occur as a result of gas leaving the internal space 8 via the purge outlet (where employed).

The most optimal results for cable intervention activities are obtained when the differential pressure within the contained environment of the apparatus 100 is equal to or greater than the external pressure.

The advances of the present invention are evident when the internal space 8 is maintained at a differential pressure which is lower than, equal to or greater than the following range.

In preferred different embodiments of the invention, the differential pressure within the internal space 8 is 0PA, 500Pa, 1000Pa, 4000Pa, 6000Pa, 8000Pa, 10000Pa, 20000Pa and 50000Pa greater than the external pressure at which the apparatus is positioned.

In the preferred embodiment, the differential pressure within the internal space 8 for repair or joining activities is in the range of 0mbar - 100mbar.

In the preferred embodiment, the differential pressure within the internal space 8 for purging activities is in the range of 5mbar to 1 bar.

In embodiments of the invention, the differential pressure control means may comprise a user interface in which any one or combination of the interior pressure, the exterior pressure or the pressure differential may be presented to a user. The user can then control the pressure adjustment means (optionally via the user interface) to ensure that the target differential pressure is maintained. In embodiments of the invention, the user interface may be located on a surface vessel. A user interface may additionally or alternatively be provided on the exterior or interior of the apparatus 100.

To prevent potentially hazardous pressures building up in the interior space 8 (e.g. as a result of malfunction in the pressure adjustment means), the apparatus 100 may be fitted with an emergency pressure release valve.

In a further embodiment, the apparatus can be used either with or without a cradle in order to provide a dry mating environment for cable connectors. In this scenario, the connectors can be fitted to the ends of the cable within two individual units of the apparatus (rather than a traditional cable jointing procedure). The two units can thereafter be brought together such that the proximal ends of both units are fixed together with latches or another suitable means of connection as is known in the art. The water between the two curved doors can then be evacuated prior to opening the two curved doors and connecting the connectors in the dry environment of the internal space of the apparatus.

Cable intervention activity can largely be split up into the following two activities;
- Dry mateable connections which includes new cable connections, floating offshore wind turbine connections and induction bank connections. These connections can typically be connected and disconnected with relative ease when required.
- Jointing which includes repair of sections of cable of less than 5m and repair of sections of cable of more than 20m length. These joints typically cannot be disconnected once they are established.

A step by step cable dry mateable connection methodology according to the invention is provided below as an example. This type of connection is known as a click and connection activity and it is suitable for activities such as the addition on new cables to a cable system or the addition of new long sections, typically 100m or more, to an existing cable infrastructure.

### 1.1 Connection - Cutting unwanted first section of cable

- Cut a cable at the fault position. Optionally, an ROV can be used to make this cut.
- Deploy a simple cradle 10 within approximately 20m of the cable cut.
- Recover a first cable end onto the vessel.
- Remove the first 20m of cable from the first cable end.

### 1.2 Connection - Attaching connector

- Prepare the end of the cable on the vessel with connector terminations.
- Position a base shell 4 (which is provided with one base side part 22 of a side plate 18) at the end of the section of cable.
- Lower the end the cable into the base shell 4 so that connector is almost abutted to the curved door 28 (at the outer end).
- Position the top shell 6 (which is provided with one top side part 24 of the side plate 18) on top of the base shell 4.
- Connect (for example latch or weld) the top shell 6 and base shell 4 together to form a unit 2.
- Close the curved door 28 (at outer end).
- Ensure all seals are watertight (cable aperture seals, and top/ base shell 4 seals and side plate parts).

### 1.3 Connection - Deploying first end of the cable

- Position the unit 2 on a spreader bar.
- Deploy the spreader bar to the seabed such that the unit 2 aligns with a cantilever rail of the cradle 10 on the sea bed.
- Position the unit 2 onto the cantilever rail of the assembly.
- Slide the unit 2 on its cantilever rail such that the unit 2 is in the correct position for engagement.

### 1.4 Connection - Lifting the second end of the cable

- Recover a second cable end onto the vessel.
- Remove the first 20m of cable from the cable end.
- Add a new section of cable of approximately 40m in length (in order to replace the two 20m cut sections of cable) with an in-line joint onboard the vessel by following the methodology of "E- Joint" below.

### 1.5 Connection - Attaching connector and deploying first end of the cable

- Attach connector and deploy second end of the cable by following the methodology of 1.2 and 1.3 above.

### 1.6 Connection - Connector engagement

- Latch the two units 2 to each other to form an assembly.
- Evacuate the water out of the space between the two curved doors 28.
- Open the curved doors 28.
- Engage the connectors with each other.
- Remove the assembly from the rail and lower the assembly to the seabed.
- Recover the cradle 10 to the vessel.

A step by step dry mateable cable connection methodology according to the invention which is suitable for connecting to Floating Offshore Wind Turbine connections is provided below as an example.

### 1.7 Connection - Floating Offshore Wind Turbine

In this methodology the existing seabed anchored floating structure is already in place prior to the commencement of activity and a first cable from the floating structure includes a connector termination which is already provided in a unit on the vessel.

A second cable (coming from a grid) which includes a connector termination in a unit is also provided on the seabed.
- Deploy a simple cradle 10 to the sea bed.
- Place the unit of the second cable into the cradle.
- Position the unit onto the cantilever rail of the assembly.
- Slide the unit on its cantilever rail such that the unit is in the correct position for engagement.
- Deploy the first cable as per methodology 1.3.
- Connect connector as per methodology 1.6.

A step by step dry mateable cable connection methodology suitable for installing and connecting an Inductor Bank according to the invention is provided below as an example.

### 1.8 Connection - Inductor Bank

This methodology is suitable for high voltage over long distance cables as an inductor bank is included in the cable system in order to reduce reactive power flowing in cables. The inductor bank is provided in a dry sealed double unit 2 assembly on the vessel prior to commencement of activity.

Two cable ends, each of which includes a connector termination are provided in a unit 2 on the seabed prior to commencement of this activity.
- Deploy two simple cradles 10 side by side and in contact with each other, or alternatively one large simple cradle 10, to the sea bed.
- Place each unit 2 onto the cantilever rail of each cradle 10.
- Slide each unit 2 on its cantilever rail such that the unit 2 is in the correct position for engagement.
- Deploy the double unit 2 assembly containing the inductor bank so it is in position for engagement with a unit 2 on either end of the double unit 2 assembly.
- Connect the units 2 with the double unit 2 assembly and engage connectors of inductor back connector with each of the connector terminations as per process 1.6.

A step by step cable jointing methodology according to the invention is provided below as an example

### A Joint - Initial wet cable cut, positioning cable within Gantry cradle and dry cable cuts

- Deploy a cradle 10 to the seabed.
- Cut the damaged cable (wet) at the fault position.
- Suspend the cable in the cradle 10.
- Prepare the cable by splitting its constituent cores.
- Deploy an open unit 2 into a cantilevered rail of the cradle 10.
- Deploy a second open unit 2 into a second cantilevered rail of the cradle 10.
- Note: The top shells 6 are provided with one top side part 24 of the side plate 18 in place.
- Note: The base shells 4 are provided with one base side part 22 of the side plate 18 in place.
- Note: The curved doors are not closed.
- Unlatch the top shells 6 from the base shells 4.
- Raise the top shells 6 within the cradle 10 using the overhead gantry rail and slide the top shells 6 into position over the suspended split cores.
- Slide the base shells 4 of the unit 2 under the suspended cores.
- Place a core on each of the cable apertures 26 of the base side part 22 of the side plate 18.
- Lower the top shells 6 onto the base shells 4 using the gantry rail.
- Latch the top shells 6 to the base shells 4.
- Latch the first unit 2 to the second unit 2 to form a two unit 2 assembly.
- Ensure all seals are in water tight.
- Evacuate the combined internal space 8 of the two unit 2 assembly.
- Dry cut the cable (approximately halfway in the combined internal space) within the two unit 2 assembly.
- Raise the curved doors 28 on both units 2 in the two unit 2 assembly.
- Recover the unit 2 which contains the redundant cable section to the vessel.
- Deploy a second cradle 10 to the seabed.
- Repeat the methodology again with two more units 2 and the second cradle which are arranged and aligned in mirror orientation to the first two unit 2 assembly.

### B Joint - Cable preparation on seabed

- Deploy a blank plate onto the unit 2 on the cradle.
- Evacuate the water between the blank plate and the curved door 28.
- Open the curved door 28.
- Prepare the cable cores, by stripping the insulation etc., for cable intervention.
- Close the curved door 28.
- Recover the blank plate .
- Repeat the procedure for the second assembly.

### C Joint - Cable measurement

- Measure the distance between each curved door 28 of the units 2 remaining on seabed.

### D Joint - Prepare new section of cable on vessel, dry deployment to units 2 on seabed.

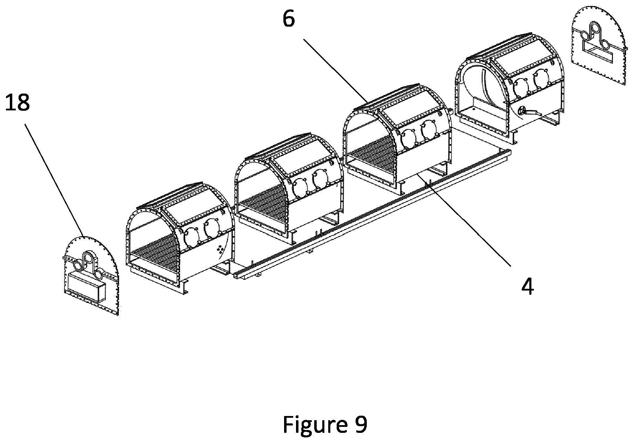

### D-1; 5m section to be replaced - create one large internal space 8 assembly for example a 4 unit assembly as illustrated in Figure 9

- Prepare both ends of a section of cable on the vessel with joints.
- Latch two base shells 4 together to form a base shell assembly which facilitates the full section of new cable.
- Lower the section of cable into the base shell assembly so that each end of the cables is almost abutted to a curved door 28 of the base shell assembly.
- Latch two top shells 6 together to form a top shell assembly which facilitates the full section of new cable.
- Position the top shell assembly on top of the base shell assembly.
- Latch the top shells 6 and base shells 4 together to form a two unit assembly.
- Close both the curved doors 28.
- Ensure all seals are watertight (top shell 6 - base shells 4 seals).
- Position the two unit assembly on a spreader bar.
- Deploy the spreader bar to the seabed and onto cantilever rails of the respective cradle on the sea bed such that the two unit assembly is aligned and fits between the two units 2 which are already on the sea bed.
- Slide the two unit assembly on both cantilever rails in parallel, such that the two unit 2 assembly comes into contact with each of the units 2 on the seabed.
- Latch the two unit 2 assembly to each unit 2 on the seabed.
- Evacuate the water out of the space between the curved doors 28 on each assembly on each cradle 10.
- Open the curved doors 28.

### D-2; 20m section to be replaced - create two separate two unit assemblies.

- Prepare both ends of a section of cable on the vessel with joints (so that the main joint body is in the parked position).
- Position a base shell 4 (which is provided with a base side part 22 of a side plate 18) at each end of the section of cable.
- Lower the ends of the section of cable into the two base shells 4 so that each end of the cable is almost abutted to the curved door (at the outer ends).
- Position top shells 6 (which are each provided with one top side part 24 of a side plate 18) on top of the base shells 4.
- Latch the top and base shells 4 together to form a unit 2.
- Close the curved doors 28.
- Ensure all seals are watertight (cable aperture seals, and top shell - base shell 4 seals and side plate base and top side parts).
- Position the two units 2 at a distance apart on spreader bar.
- Deploy the spreader bar to the seabed such that each unit 2 aligns with the cantilever rails of the respective cradle 10 on the sea bed.
- Position each of the units 2 onto the relevant cantilever rail.
- Slide each unit 2 on its cantilever rail in parallel such that the unit 2 comes into contact with the unit 2 on the seabed.
- Latch each unit 2 to the adjacent unit 2 to forma two unit assembly.
- Evacuate the water out of the space between the curved doors 28 on each assembly on each cradle 10.
- Open the curved doors 28.

### E Joint - Perform actual joint

- Connect cable core together.
- Slide the main joint body across the connected cores into its final position.
- Assemble outer layers (such as metallic and water blocking layers etc) as required.

### F Joint - Remove assemble and recover gantry cradle

- Remove the each of the two unit assemblies from the rail and lower the assemblies to the seabed.
- Recover the cradle 10 to the vessel.

It is to be understood that the invention is not limited to the specific details described herein, which are given by way of example only, and that various modifications and alterations are possible without departing from the scope of the invention as defined in the appended claims.

## Claims

1. A modular apparatus (100) for high and low voltage submerged cable interventions comprising at least two units, each unit (2) comprising; a base shell (4), a top shell (6) and at least two side plates (18) which combine to create a sealed internal space (8); wherein the side plate located at a distal end (14) of the unit allows cables (A, B, C) to pass through the exterior of the unit into the internal space; and the side plate on the proximal end (16) of the unit is a moveable curved door (28) which sits in line with a longitudinal axis of the base shell when the curved door is in the open position, and which is moveable into a side orientation thus sealing the proximal end when it is in a closed position, so that initial cable interventions can be carried out in the sealed internal space (8) of each unit and thereafter the two units can be brought together with proximal end sealed to proximal end to enable the two curved doors to open to form a combined internal space with a minimal distance between the outer edges of the two curved doors.

2. The apparatus of Claim 1, comprising a partial floor within the internal space wherein each curved door sits in line with a longitudinal axis of the base shell and under the partial floor when the curved door is in the open position, and each curved door is moveable from under the partial floor into a side orientation when the curved door is in the closed position.

3. The apparatus of any preceding claim, comprising a cradle (10) onto which the base shell and top shell of the at least two units are positioned so that they can be moved within the cradle to facilitate joining or separation of the units.

4. The apparatus of any preceding claim, wherein the internal space comprises a pressure differential with respect to the exterior of the apparatus.

5. The apparatus of any preceding claim, comprising a gas supply or gas tank for differential pressure control means.

6. The apparatus of claim 5, wherein the pressure differential is in the range of 0mbar - 100mBar for cable intervention activities.

7. The apparatus of claim 5 wherein the pressure differential is in the range of in the range of 5mbar to 1 bar for purging activities.

8. The apparatus of any preceding claim comprising at least one viewing port.

9. The apparatus of any preceding claim comprising at least one access port.

10. The apparatus of claim 9, comprising gloves and gauntlet seals for use in conjunction with the at least one access port.

11. The apparatus of any preceding claim, in which each curved door is movable by means of a rack and pinion arrangement, with the rack being provided along an edge of the curved door and the pinion being operable by a manual handle or electric motor.

12. The apparatus of any preceding claim, wherein access plates are provided to selectively cover access ports.

13. The apparatus of any preceding claim, wherein the side plate includes cable seals.

14. The apparatus of claim 13, wherein the side plate comprises fabricated shims to house the cable seals.

15. A method of performing cable interventions in subsea environment comprising the steps of:
providing at least a first modular apparatus (100) for high and low voltage submerged cable interventions according to any preceding claim on the seabed;
inserting a cable end within the modular apparatus (100) and evacuating the interior space;
preparing the cable end for cable intervention such as jointing, adding connecters etc;
providing an item for cable intervention such as new cable end, a new section of cable, an induction bank etc, within a second sealed modular apparatus (100) on a vessel; deploying the second sealed modular apparatus (100) to the seabed and positioning it adjacent to the first modular apparatus (100) such that first and second modular apparatus (100) are connected to each other;
opening the curved doors (28) of both the first modular apparatus (100) and the second modular apparatus (100) in order to form an extended interior space in which the cable intervention can take place within a dry environment; and
performing the cable intervention in the substantial absence of a wet environment.

## Patentansprüche

1. Modulare Vorrichtung (100) für Hochspannungs- und Niederspannungsunterwasserkabeleingriffe, die mindestens zwei Einheiten umfasst, wobei jede Einheit (2) Folgendes umfasst;
eine Grundschale (4), eine Oberschale (6) und mindestens zwei Seitenplatten (18), die in Kombination einen abgedichteten Innenraum (8) erzeugen;
wobei die Seitenplatte, die sich an einem distalen Ende (14) der Einheit befindet, es ermöglicht, dass Kabel (A, B, C) durch das Äußere der Einheit in den Innenraum verlaufen; und die Seitenplatte an dem proximalen Ende (16) der Einheit eine bewegbare gekrümmte Tür (28) ist, die sich in einer Linie mit einer Längsachse der Grundschale befindet, wenn sich die gekrümmte Tür in der offenen Position befindet, und die in eine Seitenausrichtung bewegbar ist, wodurch das proximale Ende abgedichtet wird, wenn sie sich in einer geschlossenen Position befindet,
sodass anfängliche Kabeleingriffe in dem abgedichteten Innenraum (8) jeder Einheit durchgeführt werden können und danach die zwei Einheiten zusammengebracht werden können, wobei proximales Ende an proximales Ende abgedichtet wird, um zu ermöglichen, dass sich die zwei gekrümmten Türen öffnen, um einen kombinierten Innenraum mit einem minimalen Abstand zwischen den Außenkanten der zwei gekrümmten Türen zu bilden.

2. Vorrichtung nach Anspruch 1, umfassend einen Teilboden innerhalb des Innenraums, wobei sich jede gekrümmte Tür in einer Linie mit einer Längsachse der Grundschale und unter dem Teilboden befindet, wenn sich die gekrümmte Tür in der offenen Position befindet, und jede gekrümmte Tür von unterhalb des Teilbodens in eine Seitenausrichtung bewegbar ist, wenn sich die gekrümmte Tür in der geschlossenen Position befindet.

3. Vorrichtung nach einem vorhergehenden Anspruch, umfassend ein Gestell (10), auf dem die Grundschale und die Oberschale der mindestens zwei Einheiten positioniert sind, sodass sie innerhalb des Gestells bewegt werden können, um das Verbinden oder Trennen der Einheiten zu erleichtern.

4. Vorrichtung nach einem vorhergehenden Anspruch, wobei der Innenraum eine Druckdifferenz in Bezug auf das Äußere der Vorrichtung umfasst.

5. Vorrichtung nach einem vorhergehenden Anspruch, umfassend eine Gasversorgung oder einen Gastank für Differenzdrucksteuermittel.

6. Vorrichtung nach Anspruch 5, wobei die Druckdifferenz für Kabeleingriffsaktivitäten im Bereich von 0 mbar - 100 mbar liegt.

7. Vorrichtung nach Anspruch 5, wobei die Druckdifferenz für Spülaktivitäten im Bereich von 5 mbar bis 1 bar liegt.

8. Vorrichtung nach einem vorhergehenden Anspruch, umfassend mindestens eine Sichtöffnung.

9. Vorrichtung nach einem vorhergehenden Anspruch, umfassend mindestens eine Zugangsöffnung.

10. Vorrichtung nach Anspruch 9, umfassend Handschuhe und Handschuhdichtungen zur Verwendung in Verbindung mit der mindestens einen Zugangsöffnung.

11. Vorrichtung nach einem vorhergehenden Anspruch, wobei jede gekrümmte Tür mittels einer Zahnstangen- und Ritzelanordnung bewegbar ist, wobei die Zahnstange entlang einer Kante der gekrümmten Tür bereitgestellt ist und das Ritzel durch einen Handgriff oder Elektromotor betätigbar ist.

12. Vorrichtung nach einem vorhergehenden Anspruch, wobei Zugangsplatten bereitgestellt sind, um Zugangsöffnungen selektiv abzudecken.

13. Vorrichtung nach einem vorhergehenden Anspruch, wobei die Seitenplatte Kabeldichtungen beinhaltet.

14. Vorrichtung nach Anspruch 13, wobei die Seitenplatte gefertigte Unterlegscheiben umfasst, um die Kabeldichtungen aufzunehmen.

15. Verfahren zum Durchführen von Kabeleingriffen in einer Unterwasserumgebung, umfassend die folgenden Schritte:
Bereitstellen mindestens einer ersten modularen Vorrichtung (100) für Hoch- und Niederspannungsunterwasserkabeleingriffe nach einem vorhergehenden Anspruch auf dem Meeresboden;
Einführen eines Kabelendes in die modulare Vorrichtung (100) und Entleeren des Innenraums;
Vorbereiten des Kabelendes für Kabeleingriffe, wie Verbinden, Hinzufügen von Verbindern usw.; Bereitstellen eines Elements für Kabeleingriffe, wie eines neuen Kabelendes, eines neuen Kabelabschnitts, einer Induktionsbank usw., innerhalb einer zweiten abgedichteten modularen Vorrichtung (100) auf einem Schiff:
Einsetzen der zweiten abgedichteten modularen Vorrichtung (100) auf dem Meeresboden und Positionieren derselben benachbart zur ersten modularen Vorrichtung (100), sodass die erste und die zweite modulare Vorrichtung (100) miteinander verbunden sind;
Öffnen der gekrümmten Türen (28) sowohl der ersten modularen Vorrichtung (100) als auch der zweiten modularen Vorrichtung (100), um einen erweiterten Innenraum zu bilden, in dem der Kabeleingriff in einer trockenen Umgebung stattfinden kann; und
Durchführen des Kabeleingriffs in der wesentlichen Abwesenheit einer nassen Umgebung.

## Revendications

1. Appareil modulaire (100) pour des interventions sur des câbles immergés à haute et basse tension comprenant au moins deux unités, chaque unité (2) comprenant :
une coque de base (4), une coque supérieure (6) et au moins deux plaques latérales (18) qui se combinent pour créer un espace interne scellé (8) ;
ladite plaque latérale située au niveau d'une extrémité distale (14) de l'unité permettant aux câbles (A, B, C) de passer à travers l'extérieur de l'unité dans l'espace interne ; et ladite plaque latérale sur l'extrémité proximale (16) de l'unité étant une porte incurvée mobile (28) qui se trouve alignée sur un axe longitudinal de la coque de base lorsque la porte incurvée se trouve dans la position ouverte, et qui est mobile dans une orientation latérale, scellant ainsi l'extrémité proximale lorsqu'elle se trouve dans une position fermée, afin que des interventions initiales sur des câbles puissent être effectuées dans l'espace interne scellé (8) de chaque unité et que les deux unités puissent ensuite être rapprochées avec l'extrémité proximale scellée à l'extrémité proximale pour permettre aux deux portes incurvées de s'ouvrir pour former un espace interne combiné avec une distance minimale entre les bords externes des deux portes incurvées.

2. Appareil de la revendication 1, comprenant un plancher partiel à l'intérieur de l'espace interne, chaque porte incurvée étant alignée avec un axe longitudinal de la coque de base et sous le plancher partiel lorsque la porte incurvée est dans la position ouverte, et chaque porte incurvée étant mobile à partir du dessous du plancher partiel dans une orientation latérale lorsque la porte incurvée est dans la position fermée.

3. Appareil d'une quelconque revendication précédente, comprenant un berceau (10) sur lequel la coque de base et la coque supérieure des au moins deux unités sont positionnées afin qu'elles puissent être déplacées à l'intérieur du berceau pour faciliter la jonction ou la séparation des unités.

4. Appareil d'une quelconque revendication précédente, ledit espace interne comprenant un différentiel de pression par rapport à l'extérieur de l'appareil.

5. Appareil d'une quelconque revendication précédente, comprenant une alimentation en gaz ou un réservoir de gaz pour des moyens de commande de pression différentielle.

6. Appareil de la revendication 5, ledit différentiel de pression étant compris dans la plage de 0 mbar à 100 mbar pour les activités d'intervention sur des câbles.

7. Appareil de la revendication 5, ledit différentiel de pression étant compris dans la plage de 5 mbar à 1 bar pour les activités de purge.

8. Appareil d'une quelconque revendication précédente, comprenant au moins un orifice de visualisation.

9. Appareil d'une quelconque revendication précédente, comprenant au moins un orifice d'accès.

10. Appareil de la revendication 9, comprenant des gants et des joints d'étanchéité de manchette destinés à être utilisés conjointement avec l'au moins un orifice d'accès.

11. Appareil d'une quelconque revendication précédente, chaque porte incurvée étant mobile au moyen d'un agencement à crémaillère et pignon, la crémaillère étant prévue le long d'un bord de la porte incurvée et le pignon pouvant être actionnés par une poignée manuelle ou un moteur électrique.

12. Appareil d'une quelconque revendication précédente, des plaques d'accès étant prévues pour couvrir sélectivement des orifices d'accès.

13. Appareil d'une quelconque revendication précédente, ladite plaque latérale comprenant des joints d'étanchéité de câble.

14. Appareil de la revendication 13, ladite plaque latérale comprenant des cales fabriquées pour loger les joints d'étanchéité de câble.

15. Procédé de réalisation d'interventions sur des câble dans un environnement sous-marin comprenant les étapes de :
fourniture d'au moins un premier appareil modulaire (100) pour des interventions sur des câbles immergés à haute et basse tension selon une quelconque revendication précédente sur le fond marin ;
l'insertion d'une extrémité de câble à l'intérieur de l'appareil modulaire (100) et l'évacuation de l'espace intérieur ;
la préparation de l'extrémité de câble pour une intervention sur des câbles telle qu'une jonction, un ajout de connecteurs, etc. ;
la fourniture d'un élément pour une intervention sur des câbles tel qu'une nouvelle extrémité de câble, une nouvelle section de câble, une banque d'induction, etc., à l'intérieur d'un second appareil modulaire scellé (100) sur un navire :
le déploiement du second appareil modulaire scellé (100) sur le fond marin et le positionnement adjacent au premier appareil modulaire (100) de sorte que le premier et le second appareil modulaire (100) soient raccordés l'un à l'autre ;
l'ouverture des portes incurvées (28) du premier appareil modulaire (100) et du second appareil modulaire (100) afin de former un espace intérieur étendu dans lequel l'intervention sur des câbles peut avoir lieu dans un environnement sec ; et
la réalisation de l'intervention sur des câbles en l'absence substantielle d'environnement humide.
